# EUROPEAN PATENT SPECIFICATION

(11) **EP 3 231 824 B1**
(45) Date of publication and mention of the grant of the patent: **12.08.2020**
(21) Application number: 16880568.7
(22) Date of filing: 25.07.2016
(51) Int. Cl.: C08F 220/56, C09K 8/68, C09K 8/508, C09K 8/88, C08F 226/02, C08F 220/58

(54) **HYDROPHOBIC ASSOCIATED POLYMER AND PREPARATION METHOD THEREFOR**
HYDROPHOBES ASSOZIIERTES POLYMER UND HERSTELLUNGSVERFAHREN DAFÜR
POLYMÈRE ASSOCIÉ HYDROPHOBE ET PROCÉDÉ POUR SA PRÉPARATION

(30) Priority: 29.12.2015 CN 201511020149
(43) Date of publication of application: 18.10.2017
(73) Proprietor: Sichuan Guangya Polymer Chemical Co., Ltd., Nanchong, Sichuan 637500 (CN)
(72) Inventor: GUO, Yongjun, Nanchong Sichuan 637500 (CN); LUO, Pingya, Nanchong Sichuan 637500 (CN); LI, Huabing, Nanchong Sichuan 637500 (CN); ZHANG, Xinmin, Nanchong Sichuan 637500 (CN); GUO, Aimin, Nanchong Sichuan 637500 (CN); HU, Jun, Nanchong Sichuan 637500 (CN)
(74) Representative: Hirsch & Associés
(86) International application number: PCT/CN2016/091589
(87) International publication number: WO 2017/113773

(56) References cited:
- EP-A1- 2 738 189
- CN-A- 103 224 779
- CN-A- 104 892 838
- CN-A- 105 418 862
- CN-A- 105 461 855
- CN-A- 105 482 037
- CN-A- 105 504 154
- CN-A- 105 504 155
- CN-A- 105 542 070
- CN-A- 105 601 804
- CN-A- 105 601 805
- CN-A- 105 601 806
- CN-A- 105 646 771
- CN-A- 105 646 772
- CN-A- 105 646 773
- CN-A- 105 646 774
- CN-A- 105 646 775
- CN-A- 105 646 776
- CN-A- 105 646 777
- US-A- 4 861 499
- US-A- 4 861 499
- US-A1- 2015 183 911

## Description

### FIELD

The present invention relates to the technical field of polymers, and more particularly to a hydrophobically associated polymer and preparation method thereof.

### BACKGROUND

In the oil field development and application technology, reformation and construction of the stratum environment is usually needed, which requires the use of a fluid with certain performances for transfer and transport. By injecting these fluids into the stratum, certain substances are brought into stratum to reform the stratum environment, so as to achieve the purpose of oil and gas field development and production increase. At the same time, the associated application technology also requires that the fluids themselves have certain performance such as thickening, viscoelasticity, drag reduction, permeability, improved mobility ratio and the like. Among them, the most commonly used fluid is aqueous solution, which has advantages such as wide source, economical, easy to construction and so on. By adding natural or synthetic water-soluble macromolecules to water, an aqueous solution having the above high performances can be obtained. This kind of water-soluble polymer has strong thickening and good viscoelasticity, and has many active groups on the molecular chain, which can make physical and chemical transformation on fluid properties easily. At the same time, it has the advantages of convenient construction, low consumption and low cost, which can bring higher economic benefits for the oil field. Therefore, this type of water-soluble polymer is widely used in oilfield technology.

In the prior art, the water-soluble polymer used mainly are natural or synthetic water-soluble polymers. The yield and quality of natural polymers are limited by seasonal and regional restrictions, so the stability of their performance can not be guaranteed; and compared to synthetic polymers, natural polymers are used in a large amount, easy to be biodegraded, containing high content of water-insoluble matters, which will seriously damage the stratum environment, bringing a lot of new problems to the late development. At present, the most widely used synthetic polymer is polyacrylamide. Although all aspects of performance of polyacrylamide can meet the construction requirements, in the pumping process it is likely to cause mechanical degradation, resulting rapid decrease of solution viscosity; at the same time, in some high temperature and high salinity reservoir environment, polyacrylamide is not salt tolerant, and very easy to be degraded at high temperatures. These shortcomings lead to a significant decrease of every performance, which is difficult to be overcome on the basis of its existing molecular structure. Therefore, there is an urgent demand for modifying the polymer molecular structure to improve its shear resistance, temperature and salt tolerance.

In view of the above problems, researchers proposed hydrophobically associated water-soluble polymer. Hydrophobically associated water-soluble polymer (HAWSP) refers to a water-soluble polymer with a small amount of hydrophobic groups on the hydrophilic macromolecule chain of the polymer. In aqueous solution, when HAWSP concentration is higher than the critical association concentration, the macromolecule chains aggregate through the hydrophobic association, without chemical cross-linking to form intermolecular associated dynamic physical cross-linked network, improving the solution viscosity greatly. At the same time, the addition of some surfactants will also enhance the hydrophobic interaction between the molecular chains of the polymers, so that the strength of the intermolecular associated dynamic physical crosslinked network increases. The supramolecular physical crosslinked network present in the HAWSP and surfactant solution also allows the solution to have the characteristic of gelling, thereby providing good viscoelastic. In addition, the supramolecular dynamic physical crosslinked network has the characteristic of being destroyed at high shear rate and reversible at low shear rate, giving it stable performance and excellent temperature resistance and salt tolerance, good shear dilution ability, viscoelasticity and so on. These excellent properties all indicate that hydrophobically associated polymers have the potential to replace water-soluble polymers in existing conventional oilfields.
Document US 4861499A describes a copolymer that does not comprise repeating units represented by formula (IV): 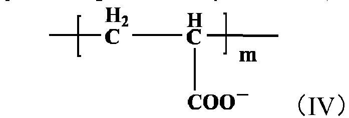 wherein x:m=1:(0.1∼0.20);
Documents US 2015/183911 A1 and EP 2738189A1 describe a copolymer that does not disclose that the allyl alkyl quaternary ammonium salt is selected from 2-methacryloyloxyethyl-dimethyldodecylammonium bromide, dodecyl allyl tetramethylbutylammonium dibromide, tetradecyl allyl tetramethylbutylenediammonium dichloride, dodecyldipropyl allyl ammonium chloride.

A novel hydrophobically associated polymer is provided in the present invention.

### SUMMARY

In view of this, the technical problem to be solved by the present invention is to provide a novel hydrophobically associated polymer having better salt tolerance and a method for preparing thereof.

A hydrophobically associated polymer provided in the present invention as defined in the claims comprises repeating units represented by formulas (I) and (II): 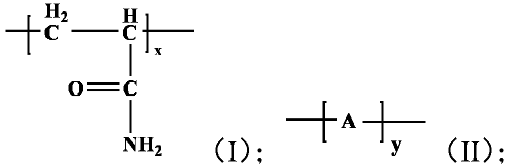 wherein, x:y=1:(0.005∼0.01); said A is the monomer unit of hydrophobic monomer; said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate. The viscosity-average molecular weight of said hydrophobically associated polymer, measured and calculated by using an Ubbelohde viscometer (0.55mm diameter according to GB/T 12005.10-92, is 5,000,000∼35,000,000; wherein said allylalkyl quaternary ammonium salts are selected from 2-methacryloyloxyethyl-dimethyldodecylammonium bromide, dodecyl allyl tetramethylbutylammonium dibromide, tetradecyl allyl tetramethylbutylenediammonium dichloride, dodecyldipropyl allyl ammonium chloride.

Preferably, the number of carbon atoms in alkyl group in N-alkyl substituted acrylamide and derivatives thereof, alkyl acrylate, alkyl methacrylate, allylalkyl quaternary ammonium salts, acrylic acid alkyl sulfonic acid and sulfonate salts thereof, alkylphenol polyoxyethylene acrylate, polyoxyethylene alkyl acrylate, fluoro-substituted alkyl acrylate and fluoro-substituted alkyl methacrylate is each independently 4∼40.

Preferably, said hydrophobic monomer is selected from one or more of 2-(N-ethyl perfluorosulfonic acid amine) ethyl methacrylate, 2-(N-ethyl perfluorooctane) butyl methacrylate, dodecyl acrylate, cetyl acrylate, octadecyl acrylate, dodecyl methacrylate, cetyl methacrylate, octadecyl methacrylate, N-dodecylacrylamide, N-cetylacrylamide, N-phenylethylacrylamide, 2-acrylamido-2-methylpentacosyl sulfonate sodium, N-octylpropionamide, 2-acrylamido-2-methyldocosylsulfonate sodium, N-tetradecyl acrylamide, N,N-dioctylacrylamide, hexafluorobutyl methacrylate, tetradecyl methacrylate, [(1-naphthyl)methyl]acrylamide, 2-(1-acetamide naphthalene)ethyl acrylate, N-[(1-pyrenylsulfonamido)ethyl]acrylamide, cetyl allyl tetramethylethylenediammonium dibromide, sodium 2-acrylamidotetradecanesulfonate, sodium 2-acrylamido-2-methyldodecane sulfonate, nonylphenol polyoxyethylene acrylate, octylphenol polyoxyethylene acrylate, dodecyl polyoxyethylene acrylate, octadecyl allyl tetramethylethylenediammonium dibromide, cetyl polyoxyethylene acrylate, 2-methacryloyloxyethyl-dimethyldodecylammonium bromide, N-cetylacrylamide, N-octylacrylamide, dodecyl allyl tetramethylbutylenediammonium dibromide, tetradecyl allyl tetramethylbutylenediammonium dichloride and (4-acrylamido) phenyl n-butyldimethylammonium bromide.

Repeating unit represented by formula (III) is also included: 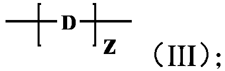 wherein, x:z=1:(0.01∼0.03); said D is a monomer unit of functional monomer; said functional monomer is selected from one or more of sulfonic acid derivatives containing a terminal alkenyl group and sulfonate salt derivatives thereof, and heterocyclic derivatives containing a terminal alkenyl group.

Preferably, the number of carbon atom of the functional monomer is 2~20.

Preferably, said functional monomer is selected from one or more of 2-acrylamido-2-methylpropanesulfonic acid and sulfonate salts thereof, vinyl sulfonic acid and sulfonate salts thereof, styrylsulfonic acid and sulfonate salts thereof, and N-vinyl-2-pyrrolidone.

Repeating unit represented by formula (IV) is also included: 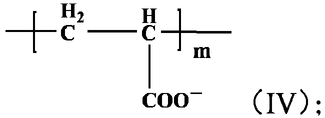 wherein, x:m=1:(0.1∼0.20).

A method for preparing hydrophobically associated polymers is also provided in the present invention, comprising: under the action of an initiator, acrylamide monomer is copolymerized with a hydrophobic monomer to generate a hydrophobically associated polymer. Said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salt, acrylamide alkyl sulfonic acid and sulfonate salts thereof, alkylphenol polyoxyethylene acrylate and polyoxyethylene alkyl acrylate; the viscosity-average molecular weight of said hydrophobically associated polymer measured and calculated by using an Ubbelohde viscometer (0.55mm diameter) according to GB/T 12005.10-92, is 5,000,000∼35,000,000; wherein said allylalkyl quaternary ammonium salts are selected from 2-methacryloyloxyethyl-dimethyldodecylammonium bromide, dodecyl allyl tetramethylbutylendiammonium dibromide, tetradecyl allyl tetramethylbutylenediammonium dichloride, dodecyldipropyl allyl ammonium chloride.

The molar ratio of said acrylamide monomer to hydrophobic monomer is 1:(0.005∼0.01).

A functional monomer is also added; said functional monomer is selected from one or more of sulfonic acid derivatives containing terminal alkenyl group and sulfonate derivatives thereof, and heterocyclic derivatives containing terminal alkenyl group; the molar ratio of said acrylamide monomer to functional monomer is 1 :(0.01∼0.03). Sodium acrylate is also added; the molar ratio of the acrylamide monomer to sodium acrylate is 1: (0.1-0.2).

The present invention also provides the use of hydrophobically associated polymer in the fields of oilfield chemistry, water treatment, papermaking and mineral flotation.

The present invention provides a hydrophobically associated polymer which comprises repeating units represented by formulas (I) to (IV) , wherein, x:y=1:(0.005∼0.01); x:z=1:(0.01-0.03) and x:m=1:(0.1-0.2); said A refers to the monomer unit of hydrophobic monomer; said hydrophobic monomer is selected from one or more of N-alkyl substituted acrylamides and derivatives thereof, alkyl acrylates, alkyl methacrylates, fluoro-substituted alkyl acrylates, fluoro-substituted alkyl methacrylates, allylalkyl quaternary ammonium salts, acrylamide alkyl sulfonic acids and sulfonates thereof, alkylphenol polyoxyethylene acrylates and polyoxyethylene alkyl acrylates; the viscosity-average molecular weight of said hydrophobically associated polymer is 5,000,000~35,000,000. Compared with the prior art, the hydrophobically associated polymer of the present invention comprises two kinds of monomer units: hydrophilic unit is acrylamide monomer unit which can provide a hydrophilic group for the hydrophobic polymer to ensure that the polymer has a good water-solubility; hydrophobic unit is hydrophobic monomer unit, which can provide hydrophobic pendant for hydrophobically associated polymer, to ensure that the polymer chain has certain hydrophobic properties. In water, hydrophobic groups aggregate due to hydrophobic interaction, forming a spatial network structure, thus providing the necessary viscoelasticity for the solution. The above two kinds of units work together to improve the temperature resistance and salt tolerance and shear resistance of the hydrophobically associated polymer.

### BRIEF DESCRIPTION OF THE DRAWINGS

Fig. 1 is the curve of temperature and shear resistance of the associated non-crosslinked fracturing fluid configured by the hydrophobically associated polymer prepared according to Reference Example 37 as a thickener.
Fig. 2 is the curve of temperature and shear resistance of the associated non-crosslinked fracturing fluid configured by the hydrophobically associated polymer prepared according to Reference Example 23 as a thickener.
Fig. 3 is nuclear magnetic resonance spectrum of a hydrophobically associated polymer prepared according to Reference Example 25
Fig. 4 is nuclear magnetic resonance spectrum of a hydrophobically associated polymer prepared according to Reference Example 22
Fig. 5 is nuclear magnetic resonance spectrum of a hydrophobically associated polymer prepared according to Reference Example 45
Fig. 6 is nuclear magnetic resonance spectrum of a hydrophobically associated polymer prepared according to Reference Example 48
Fig. 7 is Fourier infrared spectrum of a hydrophobic associative polymer prepared according to Reference Example 25
Fig. 8 is Fourier infrared spectrum of a hydrophobic associative polymer prepared according to Example 22
Fig. 9 is Fourier infrared spectrum of a hydrophobic associative polymer prepared according to Reference Example 33
Fig. 10 is Fourier infrared spectrum of a hydrophobic associative polymer prepared according to Reference Example 63
Fig. 11 is Fourier infrared spectrum of a hydrophobic associative polymer prepared according to Reference Example 29

### DETAILED DESCRIPTION OF THE INVENTION

The technical solutions of the present invention will now be described more clearly.

The present invention provides a hydrophobically associated polymer comprises repeating units represented by formulas (I) and (II): 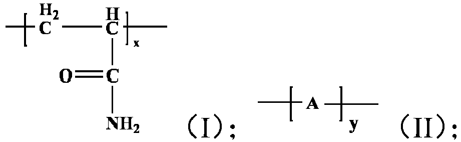 wherein, x:y=1:(0.005∼0.01).

Said A is the monomer unit of hydrophobic monomer; said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate; preferably, one of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate.

The number of carbon atom of said alkyl groups in the N-alkyl substituted acrylamide and derivatives thereof, alkyl acrylate, alkyl methacrylate, allylalkyl quaternary ammonium salts, acrylamide alkyl sulfonic acid and sulfonate salts thereof, alkylphenol polyoxyethylene acrylate, polyoxyethylene alkyl acrylate, fluoro-substituted alkyl acrylate and fluoro-substituted alkyl methacrylate is each independently 4∼40, more preferably 4∼30, most preferably 6∼20. When said hydrophobic monomer is an N-alkyl substituted acrylamide and its derivatives, alkyl acrylate, alkyl methacrylate, fluoro substituted alkyl acrylate or fluorine-substituted alkyl methacrylate, it is an oil-soluble monomer; when said monomer is allylalkyl quaternary ammonium salts, acrylamide alkyl sulfonic acid and their sulfonates, alkylphenol polyoxyethylene acrylate or polyoxyethylene alkyl acrylates, it is water-soluble monomer. The number of carbon atoms of the alkyl group in the hydrophobic monomer is preferably 4∼20, and more preferably 6∼20.

Said N-alkyl substituted acrylamide derivatives is preferably a derivative containing a benzene ring structure; the polymerization degree of said polyoxyethylene in the alkylphenol polyoxyethylene acrylate and the polyoxyethylene alkyl acrylate is each independently 7~20, more preferably 7∼16; the number of fluorine atom in said fluorine-substituted alkyl acrylate and fluorine-substituted alkyl methacrylate is each independently 4∼10, more preferably 6∼8, and most preferably 2-(N-ethyl perfluorosulfonic acid amine) ethyl methacrylate or 2-(N-ethyl perfluorooctane) butyl methacrylate. Said hydrophobic monomer in the present invention is most preferably selected from one or more of 2-(N-ethyl perfluorosulfonic acid amine) ethyl methacrylate, 2-(N-ethyl perfluorooctane) butyl methacrylate, dodecyl acrylate, cetyl acrylate, octadecyl acrylate, dodecyl methacrylate, cetyl methacrylate, octadecyl methacrylate, N-dodecylacrylamide, N-cetyl acrylamide, N-phenylethyl acrylamide, sodium 2-acrylamido-2-methylpentacosyl sulfonate, N-octylpropionamide, sodium 2-acrylamido-2-methyldocosylsulfonate, N-tetradecyl acrylamide, N,N-dioctylacrylamide, hexafluorobutyl methacrylate, tetradecyl methacrylate, [(1-naphthyl)methyl] acrylamide, 2-(1-acetamide naphthalene) ethyl acrylate, N-[(1-pyrenylsulfonamido)ethyl] acrylamide, cetyl allyl tetramethylethylenediammonium dibromide, sodium 2-acrylamidotetradecanesulfonate, sodium 2-acrylamido-2-methyldodecane sulfonate, nonylphenol polyoxyethylene acrylate, octylphenol polyoxyethylene acrylate, dodecyl polyoxyethylene acrylate, octadecyl allyl tetramethylethylenediammonium dibromide, cetyl polyoxyethylene acrylate, 2-methacryloyloxyethyl-dimethyldodecylammonium bromide, N-cetylacrylamide, N-octylacrylamide, dodecyl allyl tetramethylbutylenediammonium dibromide, tetradecyl allyl tetramethylbutylenediammonium dichloride and (4-acrylamido) phenyl n-butyldimethylammonium bromide.

In the present invention, the viscosity-average molecular weight of said hydrophobically associated polymer is 5,000,000∼35,000,000; preferably, 6,000,000∼32,000,000; more preferably, 7,000,000∼30,000,000; more preferably, 8,000,000∼30,000,000; even more preferably, 10,000,000∼30,000,000; still even more preferably, 10,000,000∼25,000,000.

According to present teachings, said hydrophobically associated polymer also comprises the repeating unit represented by formula (III): 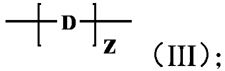 wherein, x:z= 1:(0.01∼0.03); said D is the monomer unit of functional monomer; said functional monomer is selected from one or more of sulfonic acid derivatives containing a terminal alkenyl group and sulfonate salt derivatives thereof, and heterocyclic derivatives containing an terminal alkenyl group; the number of carbon atoms of the functional monomer is preferably 2∼20, more preferably 2∼15, still most preferably 2∼10. Most preferably, said functional monomer is selected from one or more of 2-acrylamido-2-methylpropanesulfonic acid and its sulfonate salts, vinyl sulfonic acid and its sulfonates, styrylsulfonic acid and its sulfonate salts and N-vinyl-2 -pyrrolidone.

According to present teachings, said hydrophobically associated polymer also comprises the repeating unit represented by formula (IV): 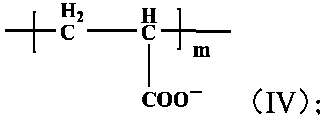 wherein, x:m=
1:(0.1∼0.20).

The hydrophobically associated polymer of the present invention comprises two kinds of monomer units: hydrophilic unit is acrylamide monomer unit which can provide a hydrophilic group for the hydrophobic association compound to ensure that the polymer has a good water-solubility; hydrophobic unit is hydrophobic monomer unit, which can provide hydrophobic pendant for hydrophobically associated polymer, to ensure that the polymer chain has certain hydrophobic properties. In water, hydrophobic groups aggregate due to hydrophobic interaction, forming a spatial network structure, thus providing the necessary viscoelastic for the solution. The above two kinds of units work together to improve the temperature resistance, salt tolerance and shear resistance of the hydrophobically associated polymer.

The present invention includes monomer unit of functional monomer and monomer unit of acrylic acid ion. The monomer unit of acrylic acid ion can provide the solubility of hydrophobically associated polymer and change the rheological properties of the polymer. The functional unit is formed by the copolymerization of functional monomers. The introduction of these monomers can improve the temperature resistance and salt tolerance of the polymer. These two kinds of units work together with the above-mentioned units to improve the temperature resistance, salt tolerance and shear resistance of the hydrophobically associated polymer.

The present invention also provides a method for preparing the hydrophobically associated polymers, comprising: under the action of initiator, the acrylamide monomer is copolymerized with the hydrophobic monomer to obtain a hydrophobically associated polymer; said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate; the viscosity-average molecular weight of said hydrophobically associated polymer is 5,000,000∼35,000,000; the molar ratio of said acrylamide monomer to the hydrophobic monomer is 1:(0.005∼0.01) wherein said allylalkyl quaternary ammonium salts are selected from 2-methacryloyloxyethyl-dimethyldodecylammonium bromide, dodecyl allyl tetramethylbutylenediammonium dibromide, tetradecyl allyl tetramethylbutylenediammonium dichloride, dodecyldipropyl allyl ammonium chloride. Sodium acrylate is also added; the molar ratio of the acrylamide monomer to sodium acrylate is 1:(0.1-0.2) and a functional monomer is also added; said functional monomer is selected from one or more of sulfonic acid derivatives containing a terminal alkenyl group and sulfonate salt derivatives thereof, and heterocyclic derivatives containing a terminal alkenyl group; the molar ratio of the acrylamide monomer to the functional monomer is 1: (0.01-0.03).

Wherein, said hydrophobic monomer is as described above and will not be described again. Said initiator is an initiator known to those skilled in the art and is not particularly limited. In the present invention, a redox initiation system or a redox and azo initiator composite initiation system is preferred. The oxidant in said redox initiation system is preferably one or more of potassium persulfate, ammonium persulfate and hydrogen peroxide; the reductant in said redox initiation system is preferably one or more of sodium thiosulfate, sodium formaldehyde sulfoxylate, urea, thiourea, sodium sulfite and sodium bisulfite. Preferably, the mass ratio of the oxidant to the reductant in said redox system is (2.5∼1):1; the mass of the oxidant in said redox system preferably is 0.005%∼0.12%, more preferably 0.01%∼0.12%; still most preferably 0.03%∼0.1% of the total mass of the monomers. Said azo initiator is preferably 2,2-azodiisobutylamidine hydrochloride (AIBA) and/or azobisisopropylimidazoline hydrochloride (AIBI); the mass of said azo initiator is preferably 0.001%∼0.05% of the total mass of the monomers in the reaction system.

In the present invention, copolymerization reaction can be classified into aqueous solution polymerization, micelle polymerization and reverse-phase microemulsion polymerization, according to the different reaction types.

When the copolymerization reaction is aqueous solution polymerization, it is preferably performed in the following steps:

First, acrylamide monomer is mixed with hydrophobic monomer; the molar ratio of said acrylamide monomer to the hydrophobic monomer is 1:(0.005∼0.01). Functional monomer is added; the kind of said functional monomer is as described above and will not be described herein. The molar ratio of said acrylamide monomer to the functional monomer is 1:(0.01∼0.03). Sodium acrylate monomer is also added; the molar ratio of said acrylamide monomer to sodium acrylate monomer is 1:(0.1∼0.20). Alternatively, hydrolytic reagent is added; said hydrolytic reagent is a hydrolytic reagent which is well known to those skilled in the art and is not particularly limited. In the present invention, sodium hydroxide and/or sodium carbonate is preferred; the amount of said hydrolytic reagent added is preferably 0.8%∼15% of the total mass of monomers, more preferably 1%∼12%, even more preferably 3%∼12%, most preferably 5%∼10%. When sodium acrylate monomer is added to the reaction system, the repeating unit represented by formula (IV) is introduced in a co-hydrolysis manner; and when a hydrolytic reagent is added to the reaction system, the repeating unit represented by formula (IV) is introduced in a pre-hydrolysis manner. Preferably, said copolymerization reaction is carried out in aqueous solution, so water is neede to be added; the amount of water added is preferably such that the mass concentration of the total monomers in the reaction system is 20%∼30%, more preferably 22%∼27% of the reaction system. In order to improve the solubility of the monomer in the solution, it is also preferable to add a co-solvent; and said co-solvent is preferably one or more of thiourea, urea and sodium formate.

Then preferably, the pH of the reaction system is adjusted to 7∼9, and the initiator is added after the temperature of the reaction system reaches the initiation temperature. Said initiation temperature is preferably -5°C∼45°C, more preferably 0°C∼45°C, even more preferably 10°C∼45°C, still even more preferably 15°C∼45°C, again still even more preferably 20°C∼45°C, and most preferably 30°C∼45°C. When the initiation temperature is low, preferably, co-initiator is added to increase the decomposition rate of the initiator at low temperatures; said co-initiator is well known to those skilled in the art and is not particularly limited. Said co-initiator is preferably one or more of tetramethyl ethylene diamine, zinc acetate and glacial acetic acid. The molecular weight of the hydrophobically associated polymer is mainly controlled by the initiation temperature and the amount of initiator added. The higher the initiation temperature is, the greater the amount of the initiator added, and the lower the viscosity-average molecular weight of the hydrophobically associated polymer obtained is.

After the initiator is added, it is preferable that the reaction system is subjected to a copolymerization reaction under adiabatic environment. The duration for the copolymerization reaction is preferably 5∼7h; and more preferably, the temperature of the reaction system does not exceed 1°C within 30min, till the reaction is completed.

After the completion of the reaction, granulation is preferably performed. When sodium acrylate or the hydrolytic reagent is not added to the reaction system, it is preferable to add hydrolytic reagent to perform the hydrolysis after granulation, so as to introduce a repeating unit represented by formula (IV) in a post-hydrolysis manner. Said hydrolytic reagent is well known to those skilled in the art and is not particularly limited. Sodium hydroxide and/or sodium carbonate is preferred in the present invention, more preferably sodium hydroxide. The amount of said hydrolytic reagent added is preferably 0.8%~ 15% of the total mass of copolymerization reaction product, more preferably 1%∼12%, even more preferably 3%∼12%, most preferably 5%∼10%. Said hydrolysis temperature is preferably 70°C∼100°C, more preferably 80°C∼100°C, even more preferably 90°C∼100°C. Said hydrolysis time is preferably 1∼3h.

Finally, drying is performed to obtain a hydrophobically associated polymer. The drying temperature is preferably 70°C∼100°C, more preferably 80°C∼100°C, even more preferably 90°C∼100°C. Said drying time is preferably 0.5~2h.

When the copolymerization reaction is micelle polymerization, it is preferable to carry out the following steps:

First, acrylamide monomer is mixed with hydrophobic monomer; preferably, the surfactant is added. The molar ratio of said acrylamide monomer to the hydrophobic monomer is 1:(0.005∼0.01). Said surfactant is preferably anionic surfactant; more preferably, it is one or more of sodium dodecyl sulfonate, sodium dodecyl sulfate and sodium dodecylbenzenesulfonate. The molar ratio of said surfactant to hydrophobic monomer is preferably (2∼30):1, more preferably (5∼25):1, even more preferably (5∼20): 1, most preferably (5∼15): 1.

Functional monomer is also added; and the kinds of said functional monomer is as described above and will not be described herein. The molar ratio of said acrylamide monomer to the functional monomer is 1:(0.01∼0.03). Sodium acrylate monomer is also added; and the molar ratio of said acrylamide monomer to sodium acrylate monomer is 1:(0.1∼0.20). Alternatively, hydrolytic reagent is added; said hydrolytic reagent is well known to those skilled in the art and is not particularly limited. Sodium hydroxide and/or sodium carbonate are preferred in the present invention; the amount of said hydrolytic reagent added is preferably 0.8%∼15% of the total monomer mass, more preferably 1%∼12%, even more preferably 3%∼12%, and most preferably 5%∼10%. When sodium acrylate monomer is added to the reaction system, the repeating unit represented by formula (IV) is introduced in a co-hydrolysis manner; and when a hydrolytic reagent is added to the reaction system, the repeating unit represented by formula (IV) is introduced in a pre-hydrolysis manner. Preferably, said copolymerization reaction is carried out in aqueous solution, so water is needed to be added. The amount of water added is preferably such that the mass concentration of the total monomer in the reaction system is 20%∼30%, more preferably 22%∼27%.

Then preferably, the pH of the reaction system is adjusted to 7~9, and the initiator is added after reaction temperature reaches the initiation temperature. Said initiation temperature is preferably -5°C∼45°C, more preferably 0°C∼45°C, even more preferably 10°C∼45°C, still even more preferably 15°C∼45°C, again still even more preferably 20°C∼45°C, and most preferably 30°C∼45°C. When the initiation temperature is low, preferably, co-initiator is also added to increase the decomposition rate of the initiator at low temperatures. Said co-initiator is well known to those skilled in the art and is not particularly limited. Said co-initiator in the present invention is one or more of tetramethyl ethylene diamine, zinc acetate and glacial acetic acid. The molecular weight of the hydrophobically associated polymer is mainly controlled by the initiation temperature and the amount of initiator added. The higher the temperature is, the greater the addition amount of the initiator is, and the lower the viscosity-average molecular weight of the hydrophobically associated polymer obtained is.

After the initiator is added, it is preferable that the reaction system is subjected to copolymerization reaction under adiabatic environment. The duration for the copolymerization reaction is preferably 5∼7h, and more preferably, the temperature of the reaction system does not exceed 1°C within 30min, till the reaction is completed.

After the completion of the reaction, granulation is preferably carried out. When sodium acrylate or hydrolytic reagent is not added to the reaction system, it is preferable to add a hydrolytic reagent to perform the hydrolysis after granulation, so as to introduce a repeating unit represented by formula (IV) in a post-hydrolysis manner. Said hydrolytic reagent is well known to those skilled in the art and is not particularly limited. Sodium hydroxide and/or sodium carbonate are preferred in the present invention, more preferably sodium hydroxide. The amount of said hydrolytic reagent added is preferably 0.8%∼15% of the total mass of copolymerization reaction product, more preferably 1%∼12%, even more preferably 3%∼12%, most preferably 5%∼10%. The temperature of hydrolysis is preferably 70°C∼100°C, more preferably 80°C∼100°C, even more preferably 90°C∼100°C. Said hydrolysis time is preferably 1∼3h.

Finally, drying is performed to obtain a hydrophobically associated polymer. The drying temperature is preferably 70°C∼100°C, more preferably 80°C∼100°C, even more preferably 90°C∼100°C. Said drying time is preferably 0.5∼2h.

When the copolymerization reaction is reverse microemulsion polymerization, it is preferable to perform in the following steps:

First, acrylamide monomer and hydrophobic monomer are dissolved in water, serving as aqueous phase; the molar ratio of said acrylamide monomer to hydrophobic monomer is 1:(0.005∼0.01).Functional monomer is added to said aqueous phase; the kinds of said functional monomer is as described above and will not be described herein. The molar ratio of said acrylamide monomer to the functional monomer is 1:(0.01∼0.03). Sodium acrylate monomer is also added to said aqueous phase. The molar ratio of said acrylamide monomer to sodium acrylate monomer is 1:(0.1∼0.20). Alternatively, hydrolytic reagent is added; said hydrolytic reagent is well known to those skilled in the art and is not particularly limited. Sodium hydroxide and/or sodium carbonate are preferred in the present invention. The amount of said hydrolytic reagent is preferably 0.8%∼15% of the total monomer mass, more preferably 1%∼12%, even more preferably 3%∼12%, most preferably, 5%∼10%. When sodium acrylate monomer is added to the reaction system, the repeating unit represented by formula (IV) is introduced in a co-hydrolysis manner; and when a hydrolytic reagent is added to the reaction system, the repeating unit represented by formula (IV) is introduced in a pre-hydrolysis manner.

Preferably, surfactant is also added to the oil solvent, serving as oil phase. Wherein, said oil solvent is well known to those skilled in the art and is not particularly limited. Preferably, it is one or more of kerosene, white oil and liquid paraffin, more preferably kerosene. Emulsifier is well known to those skilled in the art and is not particularly limited. In the present invention, nonionic surfactants having an HLB value of 6∼8 are preferred, Span nonionic surfactants and/or Tween nonionic surfactants are more preferred, Span nonionic surfactants and/or Tween nonionic surfactants are more preferred, and Span-80 and Tween-60 are most preferred. The mass ratio of Span nonionic surfactants to Tween nonionic surfactants is preferably (3∼12):4, more preferably (4∼10):4, most preferably 6:4. The mass of said emulsifier is preferably 10%∼20% of total mass of the polymerization system, more preferably 15%∼20%.

Aqueous phase and oil phase are mixed; the ratio of said oil solvent to water is preferably (1∼1.5):1. The total mass concentration of monomers in the reaction system after mixing is preferably 20%∼30%, more preferably 22%∼27%.

Then preferably, the pH of the reaction system is adjusted to 7~9, and the initiator is added after the temperature of the reaction system reaches the initiation temperature. Said initiation temperature is preferably -5°C∼45°C, more preferably 0°C∼45°C, even more preferably 10°C∼45°C, still even more preferably 15°C∼45°C, again still even more preferably 20°C∼45°C, and most preferably 30°C∼45°C. When the initiation temperature is low, preferably co-initiator is added to increase the decomposition rate of the initiator at low temperatures. Said co-initiator is well known to those skilled in the art and is not particularly limited. Said co-initiator is one or more of tetramethyl ethylene diamine, zinc acetate and glacial acetic acid. The molecular weight of the hydrophobically associated polymer is mainly controlled by the initiation temperature and the amount of initiator added. The higher the temperature is, the greater the addition amount of the initiator is, and the lower the viscosity-average molecular weight of the hydrophobically associated polymer obtained is.

After the initiator is added, it is preferable that the reaction system is subjected to a copolymerization reaction under adiabatic environment. The duration for the copolymerization reaction is preferably 5∼7h, and more preferably, the temperature of the reaction system does not exceed 1°C within 30min, till the reaction is completed.

Demulsification is performed after reverse microemulsion copolymerization, no needing granulation. When sodium acrylate or hydrolysis reagent is not added to the reaction system, it is preferable to precipitate after the demulsification. Hydrolysis reagent added to hydrolyze after dissolution, introducing the repeating unit represented by the formula (IV) in a post-hydrolysis manner. Said hydrolytic reagent is well known to those skilled in the art and is not particularly limited. Sodium hydroxide and/or sodium carbonate are preferred in the present invention, and sodium hydroxide is more preferred. The amount of said hydrolytic reagent added is preferably 0.8%∼15% of the total mass of copolymerization reaction product, more preferably 1%∼12%, even more preferably 3%∼12%, most preferably 5%∼10%. The temperature of hydrolysis is preferably 70°C∼100°C, more preferably 80°C∼100°C, most preferably 90°C∼100°C. The hydrolysis time is preferably 1~3h.

The precipitant used after the hydrolyzation of the product solution of said inverse microemulsion polymerization is well known to those skilled in the art and is not particularly limited. In the present invention, it is preferably alcohols; more preferably, it is one or more of ethanol, methanol or isopropanol; even more preferably, it is ethanol.

Finally, drying is performed to obtain a hydrophobically associated polymer. The drying temperature is preferably 70°C∼100°C, more preferably 80°C∼100°C, most preferably 90°C∼100°C; and the duration of drying is preferably 0.5∼2h.

In the present invention, an initiator is used to prepare a hydrophobically associated polymer. Composite initiator is decomposed in water to form monomer free radicals, which is added with olefinic monomers to form the monomer free radicals, i. e. the active species; then the monomer free radicals open the π bond of other olefinic monomers to form new free radicals. The reactivity of the new free radicals thus formed do not degrade and the linkage addition to the olefinic monomer is continued, and the chain growth reaction is carried out in this manner. When active collision occurs between the free radicals of two chains, double-base termination reaction occurs, leading to the end of the polymerization.

The present invention also provides the use of said hydrophobically associated polymers in the fields of oilfield chemistry, water treatment, papermaking and mineral flotation. When the hydrophobically associated polymer has a viscosity-average molecular weight of 5,000,000 to 35,000,000, it can be used as an oil displacement agent in oilfield chemistry; when the hydrophobically associated polymer has a viscosity-average molecular weight of 5,000,000 to 20,000,000, it can be used as a thickener in conventional fracturing liquid in oilfield chemistry; when the hydrophobically associated polymer has a viscosity-average molecular weight of 5,000,000 to 35,000,000, it can be used as a resistance-reducing agent of water fracturing fluid; when the hydrophobically associated polymer has a viscosity-average molecular weight of 5,000,000 to 25,000,000, it can be used as a gel polymer for profile control and plugging.

The reagents used in the following Examples are all commercially available.

### Reference example 1

Acrylamide and 2-methacryloyloxyethyl-dimethyldodecylammonium bromide were added into a 5000ml beaker at a molar ratio of 99:1 to make a mixed solution by using pure water in which the total mass concentration of monomers is 24%, stirred until dissolved. After the mixed solution was heated in water bath to a temperature of 45°C, the pH of the system was adjusted to 9 by sodium hydroxide solution. Potassium sulfate and sodium thiosulfate, which were the composite initiators, were added to initiate the polymerization, wherein the mass ratio of potassium sulfate to sodium thiosulfate was 1:1 and the amount of potassium sulfate added was 1.10% of the mass of the monomers. Polymerization reaction was carried out under adiabatic environment. The polymerization reaction was completed when the temperature of the reaction system did not exceed 1°C within 30min. One hour after the completion of polymerization reaction, colloid was taken out and cut into particles with a size of 3∼5mm. Hydrolytic reagent NaOH was added at an amount of 2.4% of total colloid mass, mixed well, and transferred into plastic bags and sealed; then hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on 500-mesh screen, dried at a constant temperature of 95°C in an oven for 1h, took out and sieved, to obtain the hydrophobically associated polymer.

The viscosity-average molecular weight of hydrophobically associated polymer obtained in Example 1 was measured and calculated to be 14,030,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 1 were used to prepare a polymer solution at 50°C, which has a concentration of 5000mg/L; and the dissolution time was 2h. The viscosity of the polymer was 57mPa • s under when the concentration of the polymer solution is 2000mg/L at the temperature 85°C and a shear rate 7.34 s⁻¹. The 2000mg/L polymer solution had a 90d viscosity retention rate of 85.7% at 85°C.

### Reference example 2

The steps of Example 1 were adopted, except that the total mass concentration of monomers in the polymerization system was changed to 20%. Other materials and addition amounts remained unchanged.

The viscosity-average molecular weight of hydrophobically associated polymer obtained in Example 2 was measured and calculated to be 13,500,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 2 were used to prepare a polymer solution at 50°C, which has a concentration of 5000mg/L; and the dissolution time was 1.9h. The viscosity of the polymer was 53mPa • s under when the concentration of the polymer solution is 2000mg/L at the temperature 85°C and a shear rate 7.34 s⁻¹. The 2000mg/L polymer solution had a 90d viscosity retention rate of 82.3% at 85°C.

### Reference example 3

The steps of Example 1 were adopted, except that the total mass concentration of monomers in the polymerization system was changed to 20%. Other materials and addition amounts remained unchanged.

The viscosity-average molecular weight of hydrophobically associated polymer obtained in Example 3 was measured and calculated to be 7,530,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 3 were used to prepare a polymer solution at 50°C, which has a concentration of 5000mg/L; and the dissolution time was 1.6h. The viscosity of the polymer was 40mPa • s under when the concentration of the polymer solution is 2000mg/L at the temperature 85°C and a shear rate 7.34 s⁻¹. The 2000mg/L polymer solution had a 90d viscosity retention rate of 75.8% at 85°C.

### Reference example 4

A small amount of sodium dodecylbenzene sulfonate and pure water were added to a 5000ml beaker, stirred until dissolved. N-cetylacrylamide, which was hydrophobic monomer, was measured and dissolved in aqueous solution of sodium dodecylbenzene sulfonate mentioned above. Certain amount of acrylamide was added into said beaker and stirred thoroughly to make a mixed solution in which the total mass concentration of monomers was 25%; herein, the molar ratio of acrylamide to N-cetylacrylamide was 99:1; the molar concentration of sodium dodecylbenzene sulfonate, which was a surfactant, was 5-fold of that of the hydrophobic monomer. After heated in water bath to a temperature of 45°C, the pH of the system was adjusted to 7 with sodium hydroxide solution. Potassium persulfate and sodium thiosulfate, which were the composite initiators, were added to initiate the polymerization, wherein the mass ratio of potassium persulfate to sodium thiosulfate was 1:1 and the amount of potassium persulfate added was 0.03% of that of monomers mass. Polymerization reaction was carried out under adiabatic environment. The polymerization reaction was deemed to be completed when the increase of temperature of the reaction system did not exceed 1°C within 30min. One hour after the completion of polymerization reaction, colloid was taken out and cut into particles with a size of 3~5mm. Hydrolytic reagent NaOH was added at an amount of 2.4% of total colloid mass, mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on 500-mesh screen, dried at a constant temperature of 95°C in an oven for 1h, took out and sieved, to obtain the hydrophobically associated polymer.

The viscosity-average molecular weight of hydrophobically associated polymer obtained in Example 2 was measured and calculated to be 13,680,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 4 were used to prepare a polymer solution at 50°C, which has a concentration of 5000mg/L; and the dissolution time was 1.9h. The viscosity of the polymer was 54mPa • s under when the concentration of the polymer solution is 2000mg/L at the temperature 85°C and a shear rate 7.34 s⁻¹. The 2000mg/L polymer solution had a 90d viscosity retention rate of 79% at 85°C.

### Reference example 5

The steps of Example 4 were adopted, except that the addition amount of the initiator in the polymerization system was changed to 0.1%. Other materials and addition amounts remained unchanged. The viscosity-average molecular weight of hydrophobically associated polymer obtained was measured and calculated to be 15,600,000 by using an Ubbelohde viscometer (0.55mm diameter) according to GB/T 12005.10-92. Simulated salt water with a total salinity of 49,000 and a total Ca²⁺ and Mg²⁺ concentration of 2200mg/L, and hydrophobically associated polymer obtained in Example 5 were used to prepare a polymer solution at 50°C, which has a concentration of 5000mg/L; and the dissolution time was 2h. The viscosity of the polymer was 60mPa • s under when the concentration of the polymer solution is 2000mg/L at the temperature 85°C and a shear rate 7.34 s⁻¹. The 2000mg/L polymer solution had a 90d viscosity retention rate of 82.5% at 85°C.

### Reference example 6

The steps of Example 4 were adopted, except that the addition amount of the initiator in the polymerization system was changed to 0.12%. Other materials and addition amounts remained unchanged. The viscosity-average molecular weight of hydrophobically associated polymer obtained was measured and calculated to be 15,600,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 6 were used to prepare a polymer solution at 50°C, which has a concentration of 5000mg/L; and the dissolution time was 1.5h. The viscosity of the polymer was 48mPa • s under when the concentration of the polymer solution is 2000mg/L at the temperature 85°C and a shear rate 7.34 s⁻¹. The 2000mg/L polymer solution had a 90d viscosity retention rate of 80.2% at 85°C.

### Reference example 7

A small amount of sodium dodecylbenzene sulfonate and pure water were added to a 5000ml beaker, stirred until dissolved. Hexafluorobutyl methacrylate, which was hydrophobic monomer, was measured and dissolved in aqueous solution of sodium dodecylbenzene sulfonate mentioned above. Certain amount of acrylamide was added into said beaker and stirred thoroughly to make a mixed solution in which the total mass concentration of monomers was 25%, wherein, the molar ratio of acrylamide to N-cetylacrylamide methacrylate was 99:1; the molar concentration of sodium dodecylbenzene sulfonate, which was a surfactant, was 5-fold that of the hydrophobic monomer. After heated in water bath to a temperature of 45°C, the pH of the system was adjusted to 7 with sodium hydroxide solution; potassium persulfate and sodium thiosulfate, which were the composite initiators, were added to initiate the polymerization, wherein the mass ratio of potassium persulfate to sodium thiosulfate was 2:1 and the potassium persulfate added was 0.1 % of that of monomers mass. Polymerization reaction was carried out under adiabatic environment. The polymerization reaction was deemed to be completed when the increase of temperature of the reaction system did not exceed 1 °C within 30min. One hour after the completion of polymerization reaction, colloid was taken out and cut into particles with a size of 3~5mm; hydrolytic reagent NaOH was added at an amount of 2.4% of total colloid mass and mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on a 500-mesh screen and dried at a constant temperature of 95°C in an oven for 1h, taken out and sieved to obtain the hydrophobically associated polymer. The viscosity-average molecular weight of hydrophobically associated polymer obtained in Example 7 was measured and calculated to be 12,150,000 by using an Ubbelohde viscometer (0.55mm diameter) according to GB/T 12005.10-92. Simulated salt water with a total salinity of 49,000 and a total Ca²⁺ and Mg²⁺ concentration of 2200mg/L, and hydrophobically associated polymer obtained in Example 7 were used to prepare a polymer solution at 50°C, which has a concentration of 5000mg/L; and the dissolution time was 1.6h. The viscosity of the polymer was 50mPa • s under when the concentration of the polymer solution is 2000mg/L at the temperature 85°C and a shear rate 7.34 s⁻¹. The 2000mg/L polymer solution had a 90d viscosity retention rate of 76.8% at 85°C.

### Reference example 8

The steps of Example 7 were adopted, except the mass ratio of potassium persulfate to sodium thiosulfate was changed to 1.5:1. Other materials and addition amounts remained unchanged. The viscosity-average molecular weight of hydrophobically associated polymer obtained in Example 8 was measured and calculated to be 10,360,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 8 were used to prepare a polymer solution at 50°C, which has a concentration of 5000mg/L; and the dissolution time was 1.8h. The viscosity of the polymer was 51mPa • s under when the concentration of the polymer solution is 2000mg/L at the temperature 85°C and a shear rate 7.34 s⁻¹. The 2000mg/L polymer solution had a 90d viscosity retention rate of 79.6% at 85°C.

### Reference example 9

The steps of Example 7 were adopted, except the mass ratio of potassium persulfate to sodium thiosulfate was changed to 2.4:1. Other materials and addition amounts remained unchanged. The viscosity-average molecular weight of hydrophobically associated polymer obtained was measured and calculated to be 8,760,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 9 were used to prepare a polymer solution at 50°C, which has a concentration of 5000mg/L; and the dissolution time was 1.5h. The viscosity of the polymer was 42mPa • s under when the concentration of the polymer solution is 2000mg/L at the temperature 85°C and a shear rate 7.34 s⁻¹. The 2000mg/L polymer solution had a 90d viscosity retention rate of 77.4% at 85°C.

### Reference example 10

A small amount of sodium dodecylbenzene sulfonate and pure water were added to a 5000ml beaker, stirred until dissolved. Octadecyl methacrylate, which was hydrophobic monomer, was measured and dissolved in aqueous solution of sodium dodecylbenzene sulfonate mentioned above. Certain amount of acrylamide was added into said beaker and stirred thoroughly to make a mixed solution in which the total concentration of monomers was 25%; herein, the molar ratio of acrylamide to octadecyl methacrylate was 99.8:0.2; the molar concentration of sodium dodecylbenzene sulfonate, which was a surfactant, was 5-fold of that of the hydrophobic monomer. After heated in water bath to a temperature of 45°C, the pH of the system was adjusted to 7 with sodium hydroxide solution. Potassium persulfate and sodium thiosulfate, which were the composite initiators, were added to initiate the polymerization, wherein the mass ratio of potassium persulfate to sodium thiosulfate was 1:1 and the amount of potassium persulfate added was 0.10% of that of monomers mass. Polymerization reaction was carried out under adiabatic environment. The polymerization reaction was deemed to be completed when the increase of temperature of the reaction system did not exceed 1°C within 30min. One hour after the completion of polymerization reaction, colloid was taken out and cut into particles with a size of 3∼5mm. Hydrolytic reagent NaOH was added at an amount of 2.4% of total colloid mass, mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on 500-mesh screen, dried at a constant temperature of 95°C in an oven for 1h, took out and sieved, to obtain the hydrophobically associated polymer.

The viscosity-average molecular weight of hydrophobically associated polymer obtained in Example 10 was measured and calculated to be 11,040,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 10 were used to prepare a polymer solution at 50°C, which has a concentration of 5000mg/L; and the dissolution time was 1.6h. The viscosity of the polymer was 37mPa • s under when the concentration of the polymer solution is 2000mg/L at the temperature 85°C and a shear rate 7.34 s⁻¹. The 2000mg/L polymer solution had a 90d viscosity retention rate of 72.6% at 85°C.

### Reference example 11

The steps of Example 10 were adopted, except that the molar ratio of acrylamide to octadecyl methacrylate in the polymerization system was changed to 99:1. Other materials and addition amounts remained unchanged. The viscosity-average molecular weight of hydrophobically associated polymer obtained was measured and calculated to be 15,270,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 11 were used to prepare a polymer solution at 50°C, which has a concentration of 5000mg/L; and the dissolution time was 2h. The viscosity of the polymer was 46mPa • s under when the concentration of the polymer solution is 2000mg/L at the temperature 85°C and a shear rate 7.34 s⁻¹. The 2000mg/L polymer solution had a 90d viscosity retention rate of 78.8% at 85°C.

### Reference example 12

The steps of Example 10 were adopted, except that the molar ratio of acrylamide to octadecyl methacrylate in the polymerization system was changed to 95:5. Other materials and addition amounts remained unchanged. The viscosity-average molecular weight of hydrophobically associated polymer obtained was measured and calculated to be 5,060,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 12 were used to prepare a polymer solution at 50°C, which has a concentration of 5000mg/L; and the dissolution time was 2.2h. The viscosity of the polymer was 57mPa • s under when the concentration of the polymer solution is 2000mg/L at the temperature 85°C and a shear rate 7.34 s⁻¹. The 2000mg/L polymer solution had a 90d viscosity retention rate of 89.5% at 85°C.

### Reference example 13

Pure water was added into a 5000ml beaker, then acrylamide, dodecyldipropyl allyl ammonium chloride, AMPS (molar ratio 97: 1: 2) were added successively, and the total concentration of monomers was 25%. The system was stirred until dissolved. After heated in water bath to a temperature of 45°C, the pH of the system was adjusted to 8 with sodium hydroxide solution; potassium persulfate and sodium thiosulfate, which were the composite initiators, were added to initiate the polymerization, wherein the mass ratio of potassium persulfate to sodium thiosulfate was 1.5:1 and the amount of potassium persulfate added was 0.10% of that of monomers. Polymerization reaction was carried out under adiabatic environment. The polymerization reaction was deemed to be completed when the increase of temperature of the reaction system did not exceed 1°C within 30min. One hour after the completion of polymerization reaction, colloid was taken out and cut into particles with a size of 3~5mm; hydrolytic reagent NaOH was added at an amount of 2.4% of total colloid mass and mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on a 500-mesh screen and dried at a constant temperature of 95°C in an oven for 1h, taken out and sieved to obtain the dry powder of hydrophobically associated polymer.

The viscosity-average molecular weight of hydrophobically associated polymer obtained in Example 13 was measured and calculated to be 10,800,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 13 were used to prepare a polymer solution at 50°C, which has a concentration of 5000mg/L; and the dissolution time was 1.6h. The viscosity of the polymer was 35mPa • s under when the concentration of the polymer solution is 2000mg/L at the temperature 85°C and a shear rate 7.34 s⁻¹. The 2000mg/L polymer solution had a 90d viscosity retention rate of 85.6% at 85°C.

### Reference example 14

The steps of Example 13 were adopted, except the functional monomer was replaced by N-vinyl-2-pyrrolidone. Other materials and addition amounts remained unchanged. The viscosity-average molecular weight of hydrophobically associated polymer obtained in Example 8 was measured and calculated to be 8,790,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 14 were used to prepare a polymer solution at 50°C, which has a concentration of 5000mg/L; and the dissolution time was 1.9h. The viscosity of the polymer was 24mPa • s under when the concentration of the polymer solution is 2000mg/L at the temperature 85°C and a shear rate 7.34 s⁻¹. The 2000mg/L polymer solution had a 90d viscosity retention rate of 83.8% at 85°C.

### Reference example 15

The steps of Example 13 were adopted, except the functional monomer was replaced by sodium benzenesulfonic acid acetate. Other materials and addition amounts remained unchanged. The viscosity-average molecular weight of hydrophobically associated polymer obtained was measured and calculated to be 9,400,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 15 were used to prepare a polymer solution at 50°C, which has a concentration of 5000mg/L; and the dissolution time was 1.9h. The viscosity of the polymer was 26mPa • s under when the concentration of the polymer solution is 2000mg/L at the temperature 85°C and a shear rate 7.34 s⁻¹. The 2000mg/L polymer solution had a 90d viscosity retention rate of 86.3% at 85°C.

### Reference example 16

A small amount of sodium dodecylbenzene sulfonate and pure water were added to a 5000ml beaker, stirred until dissolved. N-octylacrylamide, which was hydrophobic monomer, was measured and dissolved in aqueous solution of sodium dodecylbenzene sulfonate mentioned above. Certain amount of acrylamide and AMPS were added into said solution and stirred thoroughly to make a mixed solution in which the total concentration of monomers was 25%, the molar concentration of sodium dodecylbenzene sulfonate, which was a surfactant, was 10-fold of the hydrophobic monomer, and the molar ratio of acrylamide and N-octylacrylamide and AMPS was 95:3:2. After heated in water bath to a temperature of 45 °C, the pH of the system was adjusted to 7 with sodium hydroxide solution. Potassium persulfate and sodium thiosulfate, which were the composite initiators, were added to initiate the polymerization, wherein the mass ratio of potassium persulfate to sodium thiosulfate was 1.5:1 and the amount of potassium persulfate added was 0.10% of that of monomers mass. Polymerization reaction was carried out under adiabatic environment. The polymerization reaction was deemed to be completed when the increase of temperature of the reaction system did not exceed 1°C within 30min. One hour after the completion of polymerization reaction, colloid was taken out and cut into particles with a size of 3~5mm. Hydrolytic reagent NaOH was added at an amount of 2.4% of total colloid mass, mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on a 500-mesh screen, dried at a constant temperature of 95°C in an oven for 1h, took out and sieved, to obtain the hydrophobically associated polymer.

The viscosity-average molecular weight of hydrophobically associated polymer obtained in Example 16 was measured and calculated to be 7,500,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 10 were used to prepare a polymer solution at 50°C, which has a concentration of 5000mg/L; and the dissolution time was 2.2h. The viscosity of the polymer was 47mPa • s under when the concentration of the polymer solution is 2000mg/L at the temperature 85°C and a shear rate 7.34 s⁻¹. The 2000mg/L polymer solution had a 90d viscosity retention rate of 89.7% at 85°C.

### Reference example 17

The steps of Example 16 were adopted, except the hydrophobic monomer was replaced by octadecyl methacrylate and the molar ratio between acrylamide : octadecyl methacrylate : AMPS was changed to 97:1:2. Other materials and addition amounts remained unchanged. The viscosity-average molecular weight of hydrophobically associated polymer obtained was measured and calculated to be 9,060,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 17 were used to prepare a polymer solution at 50°C, which has a concentration of 5000mg/L; and the dissolution time was 2h. The viscosity of the polymer was 29mPa • s under when the concentration of the polymer solution is 2000mg/L at the temperature 85°C and a shear rate 7.34 s⁻¹. The 2000mg/L polymer solution had a 90d viscosity retention rate of 85.4% at 85°C.

### Reference example 18

A small amount of sodium dodecylbenzene sulfonate and pure water were added to a 5000ml beaker, stirred until dissolved. N-octylacrylamide, which was hydrophobic monomer, was measured and dissolved in aqueous solution of sodium dodecylbenzene sulfonate mentioned above. Certain amount of acrylamide and AMPS were added into said solution and stirred thoroughly to make a mixed solution in which the total concentration of monomers was 25%, the molar concentration of sodium dodecylbenzene sulfonate, which was a surfactant, was 10-fold of the hydrophobic monomer, and the molar ratio of acrylamide : octadecyl methacrylate : AMPS was 98.5:1:0.5. After heated in water bath to a temperature of 30°C, the pH of the system was adjusted to 7 with sodium hydroxide solution. Potassium persulfate and sodium thiosulfate, which were the composite initiators, were added to initiate the polymerization, wherein the mass ratio of potassium persulfate to sodium thiosulfate was 1.5:1 and the amount of potassium persulfate added was 0.10% of that of monomers mass. Polymerization reaction was carried out under adiabatic environment. The polymerization reaction was deemed to be completed when the increase of temperature of the reaction system did not exceed 1°C within 30min. One hour after the completion of polymerization reaction, colloid was taken out and cut into particles with a size of 3~5mm. Hydrolytic reagent NaOH was added at an amount of 2.4% of total colloid mass, mixed well, transferred into plastic bags and sealed. Hydrolysis was performed at a constant temperature of 95°C in an oven for 2h (what should be noted is that air should be excluded as far as possible when sealing so as to retain enough space for the ammonia generated when hydrolysis; and that the sealed bags should not be broken during hydrolysis). After the completion of hydrolysis, colloid was spread out on a 500-mesh screen, dried at a constant temperature of 95°C in an oven for 1h, taken out and sieved, to obtain the hydrophobically associated polymer.

The viscosity-average molecular weight of hydrophobically associated polymer obtained in Example 18 was measured and calculated to be 10,890,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 18 were used to prepare a polymer solution at 50°C, which has a concentration of 5000mg/L; and the dissolution time was 1.8h. The viscosity of the polymer was 32mPa • s under when the concentration of the polymer solution is 2000mg/L at the temperature 85°C and a shear rate 7.34 s⁻¹. The 2000mg/L polymer solution had a 90d viscosity retention rate of 77.3% at 85°C.

### Reference example 19

The steps of Example 18 were adopted, except that the molar ratio between acrylamide : octadecyl methacrylate : AMPS was changed to 96:1:3. Other materials and addition amounts remained unchanged. The viscosity-average molecular weight of hydrophobically associated polymer obtained was measured and calculated to be 9,500,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 19 were used to prepare a polymer solution at 50°C, which has a concentration of 5000mg/L; and the dissolution time was 2.1h. The viscosity of the polymer was 35mPa • s under when the concentration of the polymer solution is 2000mg/L at the temperature 85°C and a shear rate 7.34 s⁻¹. The 2000mg/L polymer solution had a 90d viscosity retention rate of 84.6% at 85°C.

### Reference example 20

The steps of Example 18 were adopted, except that the molar ratio between acrylamide : octadecyl methacrylate : AMPS was changed to 92:1:7. Other materials and addition amounts remained unchanged. The viscosity-average molecular weight of hydrophobically associated polymer obtained was measured and calculated to be 8,070,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 20 were used to prepare a polymer solution at 50°C, which has a concentration of 5000mg/L; and the dissolution time was 2.3h. The viscosity of the polymer was 37mPa • s under when the concentration of the polymer solution is 2000mg/L at the temperature 85°C and a shear rate 7.34 s⁻¹. The 2000mg/L polymer solution had a 90d viscosity retention rate of 88.3% at 85°C.

### Reference example 21

The steps of Example 18 were adopted, except that the molar ratio between acrylamide : octadecyl methacrylate : AMPS was changed to 89:1:10. Other materials and addition amounts remained unchanged. The viscosity-average molecular weight of hydrophobically associated polymer obtained was measured and calculated to be 6,500,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 21 were used to prepare a polymer solution at 50°C, which has a concentration of 5000mg/L; and the dissolution time was 2.1h. The viscosity of the polymer was 33mPa • s under when the concentration of the polymer solution is 2000mg/L at the temperature 85°C and a shear rate 7.34 s⁻¹. The 2000mg/L polymer solution had a 90d viscosity retention rate of 84.2% at 85°C.

### Reference example 22

The steps of Example 18 were adopted, except that the molar ratio between acrylamide : octadecyl methacrylate : AMPS was changed to 98.5:0.5:1. Other materials and addition amounts remained unchanged. The viscosity-average molecular weight of hydrophobically associated polymer obtained was measured and calculated to be 9,030,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 22 were used to prepare a polymer solution at 50°C, which has a concentration of 5000mg/L; and the dissolution time was 1.8h. The viscosity of the polymer was 22mPa • s under when the concentration of the polymer solution is 2000mg/L at the temperature 85°C and a shear rate 7.34 s⁻¹. The 2000mg/L polymer solution had a 90d viscosity retention rate of 80.9% at 85°C.

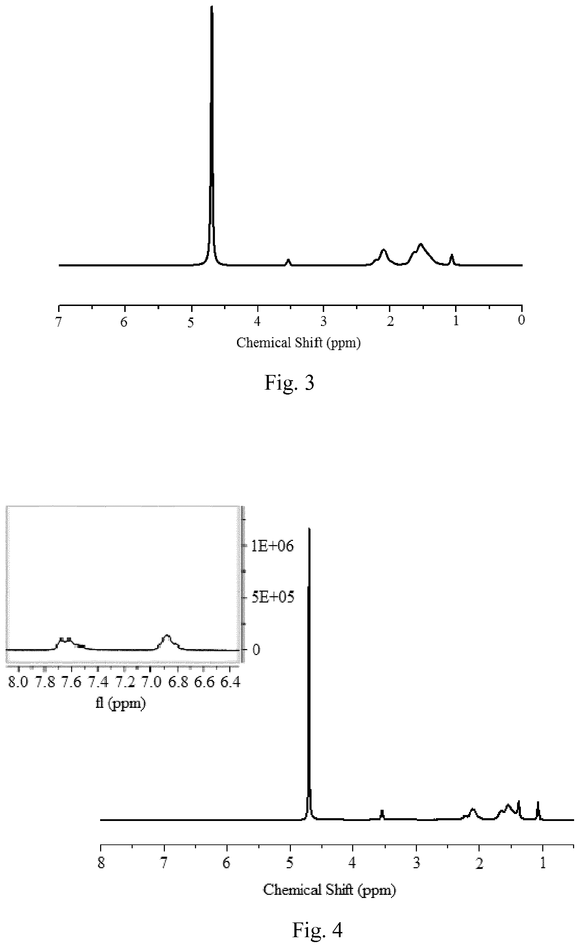

The hydrophobically associated polymer prepared in Example 22 was analyzed by nuclear magnetic resonance and the results were shown in Fig. 4. It can be known from Fig.4 that in ¹H-NMR: 6.85~7.69 was the H chemical shift of the amido group of acrylamide and AMPS (-CONH₂, -CONH-); 4.70 was the H chemical shift of the solvent D₂O; 3.71~3.73 was the H chemical shift of the methylene (-CH₂) in acrylate alkyl chain and AMPS side chain; 2.11∼2.25 was the H chemical shift of the methenyl (-CH-) in the main chain of the molecule; 1.38-1.65 was the H chemical shift of methylene (-CH₂) in the main chain; 1.23 was the H chemical shift of the methyl (-CH₃) on AMPS side chain; and 1.03~1.09 was the H chemical shift of the methyl (-CH₃) on acrylate alkyl chain.

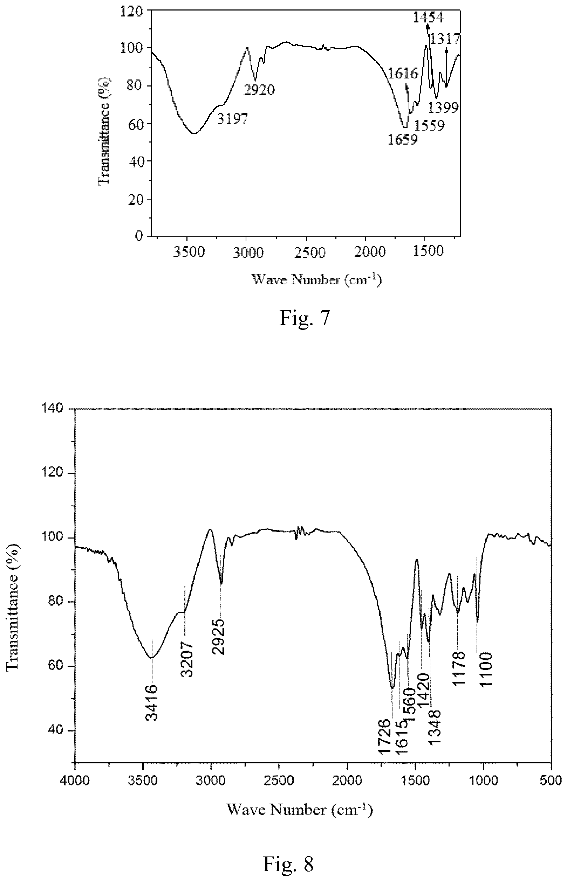

The hydrophobically associated polymer prepared in Example 22 was analyzed by Fourier transform infrared spectroscopy and nuclear magnetic resonance spectroscopy thereof was shown in Fig 8. In Fig. 8, 3420cm⁻¹ and 3206 cm⁻¹ were the asymmetrical stretching peaks of N-H; 2927 cm⁻¹ was the asymmetrical stretching peak of -CH; 1720 cm⁻¹ was the stretching vibration peak of C=O; 1665 cm⁻¹ was the stretching vibration peak of amide I band (C=O); 1418 cm⁻¹ was the stretching vibration peak of C-O; 1326 cm⁻¹ was the stretching vibration peak of C-N; 1175 cm⁻¹ was the stretching vibration peak of S=O; and 1100 cm⁻¹ was the stretching vibration peak of C-O-C.

### Reference example 23

The steps of Example 18 were adopted, except that the molar ratio between acrylamide : octadecyl methacrylate : AMPS was changed to 97:2:1. Other materials and addition amounts remained unchanged. The viscosity-average molecular weight of hydrophobically associated polymer obtained was measured and calculated to be 5,600,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 23 were used to prepare a polymer solution at 50°C, which has a concentration of 5000mg/L; and the dissolution time was 1.8h. The viscosity of the polymer was 35mPa • s under when the concentration of the polymer solution is 2000mg/L at the temperature 85°C and a shear rate 7.34 s⁻¹. The 2000mg/L polymer solution had a 90d viscosity retention rate of 86.6% at 85°C.

### Reference example 24

The steps of Example 18 were adopted, except that the molar ratio between acrylamide : octadecyl methacrylate : AMPS was changed to 94:5:1. Other materials and addition amounts remained unchanged. The viscosity-average molecular weight of hydrophobically associated polymer obtained was measured and calculated to be 4,590,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 24 were used to prepare a polymer solution at 50°C, which has a concentration of 5000mg/L; and the dissolution time was 2h. The viscosity of the polymer was 38mPa • s under when the concentration of the polymer solution is 2000mg/L at the temperature 85°C and a shear rate 7.34 s⁻¹. The 2000mg/L polymer solution had a 90d viscosity retention rate of 90.5% at 85°C.

### Reference example 25

Water, ethylenediamine tetraacetic acid disodium salt (EDTA), urea, sodium dodecyl sulfate, cetyl methacrylate, and acrylamide were added to a 5000ml beaker per as feeding ratio successively, stirred at room temperature until the system was homogenous. The compositions were: 0.02% EDTA, 0.5% urea, 0.006% sodium formate (all mean the mass fraction of the concentration of monomers). The concentration of the monomer was 22%. The molar ratio of acrylamide to cetyl methacrylate was 99.5:0.5 and the amount of sodium dodecyl sulfate added is 5.8-fold of the molar concentration of cetyl methacrylate. The beaker was put into a 15°C water bath until the solution temperature reached 15°C, then a multi-stage composite initiator consisting of potassium persulfate/formaldehyde sulfoxylate sodium and AIBA (2,2-azobisisobutyramidine hydrochloride) was added to initiate the polymerization, wherein the molar ratio of potassium persulfate to formaldehyde sulfoxylate sodium was 1.2:1, the amount of potassium persulfate added was 0.025% of the total mass of the monomers, and the amount of AIBA added was 0.002% of the total mass of the monomers. Polymerization reaction was carried out under adiabatic environment. The temperature of the polymerization system increased. After the completion of the reaction, colloid was cut into particles with a size of 3~5mm, and hydrolytic reagent NaOH was added at an amount of 2.0% of total colloid mass, mixed well, sealed and hydrolyzed under heating to hydrolyze for 3h at 90°C. After the completion of hydrolyzation, the colloid obtained was dried at 90°C for 2~2.5h, smashed and sieved, to obtain the hydrophobically associated polymer.

The viscosity-average molecular weight of hydrophobically associated polymer obtained in Example 25 was measured and calculated to be 22,080,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 25 were used to prepare a polymer solution at 50°C, which has a concentration of 5000mg/L; and the dissolution time was 2.8h. The viscosity of the polymer was 84mPa • s under when the concentration of the polymer solution is 2000mg/L at the temperature 85°C and a shear rate 7.34 s⁻¹. The 2000mg/L polymer solution had a 90d viscosity retention rate of 80% at 85°C.

¹H-NMR of the product prepared was showed in Fig. 3: 4.70 was the H chemical shift of the solvent D₂O; 3.55 was the H chemical shift of the methylene on acrylate alkyl chain; 2.10 was the H chemical shift of the methyne (-CH-) on the main chain of the molecule; 1.54 was the H chemical shift of the methylene (-CH₂) on the main chain of the molecule; and 1.05∼1.07 was the H chemical shift of the methyl (-CH₃) on acrylate alkyl chain.

As shown in Fig. 7, in Fourier transform infrared spectroscopy of the product prepared: 3197cm⁻¹ was attributed to the symmetric stretching vibration peak of N-H; 2920cm⁻¹ and 1454cm⁻¹ were attributed to the stretching vibration peak and bending vibration peak of C-H bond, respectively; 1659 cm⁻¹ was attributed to the stretching vibration peak of amide I band C=O; 1616 cm⁻¹ was attributed to the bending vibration peak of amide II band N-H; 1559cm⁻¹ was attributed to the symmetric stretching vibration peak of COO⁻; 1454 cm⁻¹ was attributed to the bending vibration peak of C-H; 1399cm⁻¹ was attributed to the asymmetric stretching vibration peak of COO⁻; and 1317cm⁻¹ was attributed to the stretching vibration peak of C-N. Based on the above data, the product contained amide group, alkyl group, carboxyl group and the like.

### Reference example 26

Water, ethylenediamine tetraacetic acid disodium salt (EDTA), urea, anhydrous sodium sulfate, sodium dodecyl benzenesulphonate, N,N-di-n-dodecylacrylamide, and acrylamide were added to a 5000ml beaker per as feeding ratio successively, stirred at room temperature until the system was homogenous. The compositions were: 0.01% EDTA, 0.2% urea, 0.001% anhydrous sodium sulfate. The concentration of the monomer was 26%. The molar ratio of acrylamide to N,N-di-n-dodecylacrylamide was 99.5:0.5 and the amount of sodium dodecyl benzenesulphonate added is 3.2-fold of the molar concentration of cetyl methacrylate. The beaker was put into a 12°C water bath until the solution temperature reached 12°C, then a multi-stage composite initiator consisting of potassium persulfate/formaldehyde sulfoxylate sodium and AIBI (azodiisopropyl imidazoline hydrochloride) was added to initiate the polymerization, wherein the molar ratio of potassium persulfate to formaldehyde sulfoxylate sodium was 1.15:1, the amount of potassium persulfate added was 0.02% of the total mass of the monomers, and the amount of AIBI added was 0.01% of the total mass of the monomers. Polymerization reaction was carried out under adiabatic environment. The temperature of the polymerization system increased. After the completion of the reaction, colloid was cut into particles with a size of 3~5mm, and 0.5% of thiourea, 0.0002% of sodium formate, 0.02% of nonylphenol polyoxyethylene ether, and 2% of NaOH based on mass fraction of the colloid were added successively, mixed well, sealed and hydrolyzed under heating to hydrolyze for 1.5h at 100°C. After the completion of hydrolyzation, the colloid particles obtained were dried at 90°C for 1~1.5h, smashed and sieved, to obtain the hydrophobically associated polymer.

The viscosity-average molecular weight of hydrophobically associated polymer obtained in Example 25 was measured and calculated to be 24,510,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 26 were used to prepare a polymer solution at 50°C, which has a concentration of 5000mg/L; and the dissolution time was 2.6h. The viscosity of the polymer was 95mPa • s under when the concentration of the polymer solution is 2000mg/L at the temperature 85°C and a shear rate 7.34 s⁻¹. The 2000mg/L polymer solution had a 90d viscosity retention rate of 83.2% at 85°C.

### Reference example 27

Water, ethylenediamine tetraacetic acid disodium salt (EDTA), urea, sodium formate, acrylamide, and dodecyl allyl tetramethylbutanediammonium dibromide were added to a 5000ml beaker per as feeding ratio successively, stirred at room temperature until the system was mixed homogenously and the pH was adjusted to 8. The compositions were: 0.05% EDTA, 0.1% urea, 0.008% sodium formate (all mean mass fraction of the total concentration of the monomers). The concentration of the monomer was 25%. The molar ratio of acrylamide to dodecyl allyl tetramethylbutanediammonium dibromide was 99:0.5. The beaker was put into a 12°C water bath until the solution temperature reached 12°C, then a multi-stage composite initiator consisting of potassium persulfate/formaldehyde sulfoxylate sodium and AIBA (2,2-azobisisobutylamidine hydrochloride) was added to initiate the polymerization, wherein the molar ratio of potassium persulfate to formaldehyde sulfoxylate sodium was 1:1, the amount of potassium persulfate added was 0.03% of the total mass of the monomers, and the amount of AIBA added was 0.05% of the total mass of the monomers. Polymerization reaction was carried out under adiabatic environment. The temperature of the polymerization system increased. After the completion of the reaction, colloid was cut into particles with a size of 3~5mm, and 1.5% of hydrolytic reagent NaOH based on total mass of the colloid were added, mixed well, sealed and hydrolyzed under heating to hydrolyze for 1.5h at 100°C. After the completion of hydrolyzation, the colloid particles obtained were dried at 90°C for 1∼1.5h, smashed and sieved, to obtain the hydrophobically associated polymer.

The viscosity-average molecular weight of hydrophobically associated polymer obtained in Example 25 was measured and calculated to be 23,350,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 27 were used to prepare a polymer solution at 50°C, which has a concentration of 5000mg/L; and the dissolution time was 1.5h. The viscosity of the polymer was 72mPa • s under when the concentration of the polymer solution is 2000mg/L at the temperature 85°C and a shear rate 7.34 s⁻¹. The 2000mg/L polymer solution had a 90d viscosity retention rate of 75.6% at 85°C.

### Reference example 28

The polymerization method and steps of Example 27 were adopted, except that the molar ratio between acrylamide and dodecyl allyl tetramethylbutanediammonium dibromide was changed to 99.5:1.0. The viscosity-average molecular weight of hydrophobically associated polymer obtained was 20,520,000 by using an Ubbelohde viscometer (0.55mm diameter) according to GB/T 12005.10-92 for measurement and calculation.

### Reference example 29

The polymerization method and steps of Example 27 were adopted, except that the molar ratio between acrylamide and dodecyl allyl tetramethylbutanediammonium dibromide was changed to 98:2.0. The viscosity-average molecular weight of hydrophobically associated polymer obtained was 18,540,000 by using an Ubbelohde viscometer (0.55mm diameter) according to GB/T 12005.10-92 for measurement and calculation. Simulated salt water with a total salinity of 49,000 and a total Ca²⁺ and Mg²⁺ concentration of 2200mg/L, and hydrophobically associated polymer obtained in Example 29 were used to prepare a polymer solution at 50°C, which has a concentration of 5000mg/L; and the dissolution time was 2.3h. The viscosity of the polymer was 125mPa•s under when the concentration of the polymer solution is 2000mg/L at the temperature 85°C and a shear rate 7.34 s⁻¹. The 2000mg/L polymer solution had a 90d viscosity retention rate of 85.4% at 85°C.

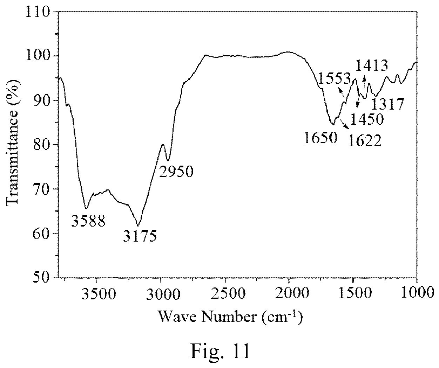

Fourier transform infrared spectroscopy of the product prepared in Example 29 was shown in Fig. 11: 3588 cm⁻¹ and 3175 cm⁻¹ were attributed to asymmetric and symmetric stretching vibration peak of N-H; 2950 cm⁻¹ and 1450 cm⁻¹ were attributed to the stretching vibration peak and bending vibration peak of C-H; 1650 cm⁻¹ was attributed to the stretching vibration peak of amide I band C=O; 1622 cm⁻¹ was attributed to the bending vibration peak of amide II band N-H; 1553 cm⁻¹ and 1413 cm⁻¹ were attributed to asymmetric and symmetric stretching vibration peak of C-O; and 1317 cm⁻¹ was attributed to the stretching vibration peak of C-N. Based on the above data, the product contained amide group, alkyl group, carboxyl group and the like.

### Reference example 30

The polymerization method and steps of Example 27 were adopted, except that the molar ratio between acrylamide and dodecyl allyl tetramethylbutanediammonium dibromide was changed to 96.8:3.2. The viscosity-average molecular weight of hydrophobically associated polymer obtained was 15,140,000 by using an Ubbelohde viscometer (0.55mm diameter) according to GB/T 12005.10-92 for measurement and calculation.

### Reference example 31

Water, ethylenediamine tetraacetic acid disodium salt (EDTA), urea, acrylamide, cetyl polyoxyethylene(17) acrylate, and **2-acrylamido-2-**methyl propyl sulfonic acid sodium (NaAMPS) were added to a 5000ml beaker per as feeding ratio successively, stirred at room temperature until the system was mixed homogenously. The compositions were: 0.012% EDTA, 0.38% urea, 0.005% sodium formate (all mean mass fraction of the total concentration of the monomers). The concentration of the total monomers was 24%. The molar ratio of acrylamide, cetyl polyoxyethylene(17) acrylate and NaAMPS was 96.5:0.5:3. The beaker was put into a 10°C water bath until the solution temperature reached 10°C, then a multi-stage composite initiator consisting of potassium persulfate/formaldehyde sulfoxylate sodium and AIBI (azobisisopropylimidazoline hydrochloride) was added to initiate the polymerization, wherein the molar ratio of potassium persulfate to sodium thiosulfate was 1.1:1, the amount of potassium persulfate added was 0.028% of the total mass of the monomers, and the amount of AIBA added was 0.012% of the total mass of the monomers. Polymerization reaction was carried out under adiabatic environment. The temperature of the polymerization system increased. After the completion of the reaction, colloid was cut into particles with a size of 3~5mm, and 2.0% of hydrolytic reagent NaOH and 0.5% of cosolvent urea based on total mass of the colloid were added, mixed well, sealed and hydrolyzed under heating to hydrolyze for 2.5h at 95°C. After the completion of hydrolyzation, the colloid particles obtained were dried at 95°C for 1∼1.5h, smashed and sieved, to obtain the hydrophobically associated polymer.

The viscosity-average molecular weight of hydrophobically associated polymer obtained in Example 31 was measured and calculated to be 18,250,000 by using an Ubbelohde viscometer (0.55mm diameter) according to GB/T 12005.10-92.

### Reference example 32

The polymerization method and steps of Example 31 were adopted, except that the functional monomer NaAMPS was replaced by N-vinylpyrrolidone. The viscosity-average molecular weight of hydrophobically associated polymer obtained was 17,230,000 by using an Ubbelohde viscometer (0.55mm diameter) according to GB/T 12005.10-92 for measurement and calculation. Simulated salt water with a total salinity of 49,000 and a total Ca²⁺ and Mg²⁺ concentration of 2200mg/L, and hydrophobically associated polymer obtained in Example 32 were used to prepare a polymer solution at 50°C, which has a concentration of 5000mg/L; and the dissolution time was 2.7h. The viscosity of the polymer was 45mPa • s under when the concentration of the polymer solution is 2000mg/L at the temperature 85°C and a shear rate 7.34 s⁻¹. The 2000mg/L polymer solution had a 90d viscosity retention rate of 90.2% at 85°C.

### Reference example 33

The polymerization method and steps of Example 31 were adopted, except that the functional monomer NaAMPS was replaced by sodium styrene sulfonate. The viscosity-average molecular weight of hydrophobically associated polymer obtained was 19,820,000 by using an Ubbelohde viscometer (0.55mm diameter) according to GB/T 12005.10-92 for measurement and calculation. Simulated salt water with a total salinity of 49,000 and a total Ca²⁺ and Mg²⁺ concentration of 2200mg/L, and hydrophobically associated polymer obtained in Example 33 were used to prepare a polymer solution at 50°C, which has a concentration of 5000mg/L; and the dissolution time was 2.8h. The viscosity of the polymer was 59mPa • s under when the concentration of the polymer solution is 2000mg/L at the temperature 85°C and a shear rate 7.34 s⁻¹. The 2000mg/L polymer solution had a 90d viscosity retention rate of 84.2% at 85°C.

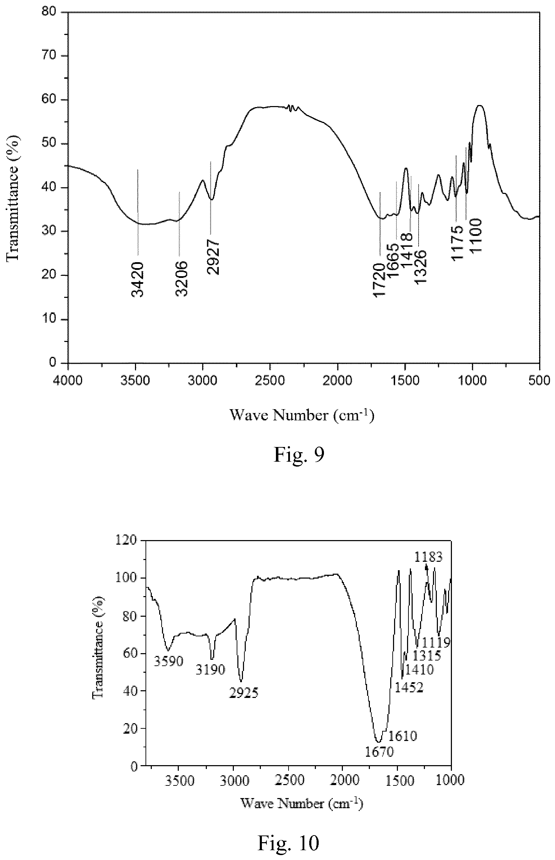

Fourier transform infrared spectroscopy of the polymer prepared in Example 33 was shown in Fig. 9: 3416 cm⁻¹ and 3207 cm⁻¹ were asymmetric stretching peaks of N-H; 2925 cm⁻¹ was asymmetric stretching peak of -CH; 1726 cm⁻¹ was the stretching vibration peak of C=O; 1615 cm⁻¹ was the bending vibration peak of amide II band (N-H); 1560 cm⁻¹ was the stretching vibration peak of COO⁻; 1420 cm⁻¹ was the stretching vibration peak of C-O; 1348 cm⁻¹ was the stretching vibration peak of C-N; 1178 cm⁻¹ was the stretching vibration peak of S=O; and 1100 cm⁻¹ was the stretching vibration peak of C-O-C.

### Reference example 34

Water, ethylenediamine tetraacetic acid disodium salt (EDTA), urea, sodium formate, sodium dodecylbenzenesulfonate, octadecyl acrylate, acrylamide and NaAMPS were added to a 5000ml beaker per as feeding ratio successively, stirred at room temperature until the system was mixed homogenously. The compositions were: 0.018% EDTA, 0.52% urea, 0.0048% sodium formate. The concentration of the total monomers was 23%. The molar ratio of acrylamide, octadecyl acrylate and NaAMPS was 97.5:0.5:2. The addition amount of dodecylbenzenesulfonate is 6.5 fold of the molar concentration of octadecyl acrylate. The beaker was put into a 18°C water bath until the solution temperature reached 18°C, then a multi-stage composite initiator consisting of potassium persulfate/formaldehyde sulfoxylate sodium and AIBI (azobisisopropylimidazoline hydrochloride) was added to initiate the polymerization, wherein the molar ratio of potassium persulfate to formaldehyde sulfoxylate sodium was 1:1, the amount of potassium persulfate added was 0.026% of the total mass of the monomers, and the amount of AIBI added was 0.018% of the total mass of the monomers. Polymerization reaction was carried out under adiabatic environment. The temperature of the polymerization system increased. After the completion of the reaction, colloid was cut into particles with a size of 3∼5mm, and 2.0% of hydrolytic reagent NaOH based on total mass of the colloid were added, mixed well, sealed and hydrolyzed under heating to hydrolyze for 2h at 95°C. After the completion of hydrolyzation, the colloid particles obtained were dried at 90°C for 2∼2.5h, smashed and sieved, to obtain the hydrophobically associated polymer.

The viscosity-average molecular weight of hydrophobically associated polymer obtained in Example 34 was measured and calculated to be 19,230,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 34 were used to prepare a polymer solution at 50°C, which has a concentration of 5000mg/L; and the dissolution time was 2.0h. The viscosity of the polymer was 38mPa • s under when the concentration of the polymer solution is 2000mg/L at the temperature 85°C and a shear rate 7.34 s⁻¹. The 2000mg/L polymer solution had a 90d viscosity retention rate of 83.9% at 95°C.

### Reference example 35

The polymerization method and steps of Example 34 were adopted, except that the molar ratio between acrylamide, octadecyl acrylate and NaAMPS was changed to 97.2:0.8:2. The viscosity-average molecular weight of hydrophobically associated polymer obtained was 17,130,000 by using an Ubbelohde viscometer (0.55mm diameter) according to GB/T 12005.10-92 for measurement and calculation. Simulated salt water with a total salinity of 49,000 and a total Ca²⁺ and Mg²⁺ concentration of 2200mg/L, and hydrophobically associated polymer obtained in Example 35 were used to prepare a polymer solution at 50°C, which has a concentration of 5000mg/L; and the dissolution time was 2.2h. The viscosity of the polymer was 47mPa • s under when the concentration of the polymer solution is 2000mg/L at the temperature 85°C and a shear rate 7.34 s⁻¹. The 2000mg/L polymer solution had a 90d viscosity retention rate of 86.4% at 85°C.

### Reference example 36

The polymerization method and steps of Example 34 were adopted, except that the molar ratio between acrylamide, octadecyl acrylate and NaAMPS was changed to 96.2:1.8:2. The viscosity-average molecular weight of hydrophobically associated polymer obtained was 16,820,000 by using an Ubbelohde viscometer (0.55mm diameter) according to GB/T 12005.10-92 for measurement and calculation. Simulated salt water with a total salinity of 49,000 and a total Ca²⁺ and Mg²⁺ concentration of 2200mg/L, and hydrophobically associated polymer obtained in Example 36 were used to prepare a polymer solution at 50°C, which has a concentration of 5000mg/L; and the dissolution time was 2.5h. The viscosity of the polymer was 65mPa • s under when the concentration of the polymer solution is 2000mg/L at the temperature 85°C and a shear rate 7.34 s⁻¹. The 2000mg/L polymer solution had a 90d viscosity retention rate of 90.9% at 85°C.

### Reference example 37

The polymerization method and steps of Example 34 were adopted, except that the molar ratio between acrylamide, octadecyl acrylate and NaAMPS was changed to 95.2:2.8:2. The viscosity-average molecular weight of hydrophobically associated polymer obtained was 15,080,000 by using an Ubbelohde viscometer (0.55mm diameter) according to GB/T 12005.10-92 for measurement and calculation.

### Reference example 38

Water, ethylenediamine tetraacetic acid disodium salt (EDTA), thiourea, anhydrous sodium sulfate, sodium dodecyl sulfate, N-[(1-pyrenylsulfonamido) ethyl]acrylamide, acrylamide and NaAMPS were added to a 5000ml beaker per as feeding ratio successively, stirred at room temperature until the system was mixed homogenously. The compositions were: 0.02% EDTA, 1.8% urea, 0.0025% anhydrous sodium sulfate. The concentration of the total monomers was 25%. The molar ratio of acrylamide, N-[(1-pyrenylsulfonamido) ethyl]acrylamide and NaAMPS was 96.7:0.3:3.0. The addition amount of sodium dodecyl sulfate is 5.2 fold of the molar concentration of N-[(1-pyrenylsulfonamido) ethyl]acrylamide. The beaker was put into a 10°C water bath until the solution temperature reached 10°C, then a multi-stage composite initiator consisting of potassium persulfate/formaldehyde sulfoxylate sodium and AIBA (2,2-azobisisobutyamidine hydrochloride) was added to initiate the polymerization, wherein the molar ratio of potassium persulfate to formaldehyde sulfoxylate sodium was 1:1, the amount of potassium persulfate added was 0.035% of the total mass of the monomers, and the amount of AIBA added was 0.018% of the total mass of the monomers. Polymerization reaction was carried out under adiabatic environment. The temperature of the polymerization system increased. After the completion of the reaction, colloid was cut into particles with a size of 3∼5mm, and 2.8% of hydrolytic reagent NaOH based on total mass of the colloid were added, mixed well, sealed and hydrolyzed under heating to hydrolyze for 1.5h at 100°C. After the completion of hydrolyzation, the colloid particles obtained were dried at 90°C for 1.5∼2.0h, smashed and sieved, to obtain the hydrophobically associated polymer.

The viscosity-average molecular weight of hydrophobically associated polymer obtained in Example 38 was measured and calculated to be 20,520,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 38 were used to prepare a polymer solution at 50°C, which has a concentration of 5000mg/L; and the dissolution time was 2.6h. The viscosity of the polymer was 39mPa • s under when the concentration of the polymer solution is 2000mg/L at the temperature 85°C and a shear rate 7.34 s⁻¹. The 2000mg/L polymer solution had a 90d viscosity retention rate of 81.2% at 95°C.

### Reference example 39

The polymerization method and steps of Example 38 were adopted, except that the molar ratio between acrylamide, N-cetyl acrylate and NaAMPS was changed to 93.7:0.3:6.0. The viscosity-average molecular weight of hydrophobically associated polymer obtained was 17,520,000 by using an Ubbelohde viscometer (0.55mm diameter) according to GB/T 12005.10-92 for measurement and calculation.

Simulated salt water with a total salinity of 49,000 and a total Ca²⁺ and Mg²⁺ concentration of 2200mg/L, and hydrophobically associated polymer obtained in Example 39 were used to prepare a polymer solution at 50°C, which has a concentration of 5000mg/L; and the dissolution time was 2.4h. The viscosity of the polymer was 45mPa • s under when the concentration of the polymer solution is 2000mg/L at the temperature 85°C and a shear rate 7.34 s⁻¹. The 2000mg/L polymer solution had a 90d viscosity retention rate of 87.2% at 85°C.

### Reference example 40

The polymerization method and steps of Example 38 were adopted, except that the molar ratio between acrylamide, N-cetyl acrylate and NaAMPS was changed to 89.7:0.3:10. The viscosity-average molecular weight of hydrophobically associated polymer obtained was 14,890,000 by using an Ubbelohde viscometer (0.55mm diameter) according to GB/T 12005.10-92 for measurement and calculation.

Simulated salt water with a total salinity of 49,000 and a total Ca²⁺ and Mg²⁺ concentration of 2200mg/L, and hydrophobically associated polymer obtained in Example 40 were used to prepare a polymer solution at 50°C, which has a concentration of 5000mg/L; and the dissolution time was 1.8h. The viscosity of the polymer was 64mPa • s under when the concentration of the polymer solution is 2000mg/L at the temperature 85°C and a shear rate 7.34 s⁻¹. The 2000mg/L polymer solution had a 90d viscosity retention rate of 90.4% at 85°C.

### Reference example 41

Deionized water, ethylenediamine tetraacetic acid sodium salt, calcium chloride, urea, isopropanol, acrylamide, hydrophobic monomer tetradecyl allyl tetramethylbutanediamine dichloride were added to a 5L beaker successively per as certain feeding ratio, stirred and dissolved at room temperature to form homogenous solution. The pH of the solution was adjusted to 7 using hydrochloric acid and sodium hydroxide. The molar ratio of tetradecyl allyl tetramethylbutanediamine dichloride to acrylamide was 0.3:99.7 in the mixed solution; the total mass fraction of the monomers in the system was 25%; the mass of ethylenediamine tetraacetic acid sodium salt was 0.01% percentage of the total mass of the solution; the mass percentage of urea was 0.2% of the total mass of the solution; the mass percentage of isopropanol was 0.005% of the total mass of the solution; and the concentration of calcium chloride was 1.5mol/L.

The system described above was put into icy salt water to keep the temperature at -5°C. Initiation system was added, which was consisted of ammonium persulfate (oxidant), tetramethyl ethylene diamine (co-initiator) and sodium sulfite (reductant), wherein the mass ratio of the oxidant, co-initiator and reductant was 1:0.5:1, and the mass of oxidant added was 0.005% of the total monomer mass in the reaction. Polymerization reaction was carried out under adiabatic environment for 4∼6h. The polymerization reaction was deemed to be basically completed when the temperature did not exceed 1°C within 30min. Colloid was taken out and cut into particles with a size of 3∼5mm. Hydrolytic reagent sodium hydroxide was added at an amount of 2.4g sodium hydroxide per 100g of colloid, mixed well and heated in a closed container to 95°C for hydrolysis for 2h. After the completion of hydrolysis, colloidal particles were dried in a forced air oven at 95 °C for 30min∼1h, and white particles were obtained. The polymer particles after drying were further crushed and sieved; and dried powder with size 0.15mm∼1.18mm was the final product, i.e. hydrophobically associated polymer.

The viscosity-average molecular weight of hydrophobically associated polymer obtained in Example 41 was measured and calculated to be 34,960,000 by using an Ubbelohde viscometer (0.55mm diameter) according to GB/T 12005.10-92.

### Reference example 42

The steps of Example 41 were adopted, except that the mass fraction of total monomer concentration in the polymerization system was changed to 20% and the hydrophobic monomer was replaced by nonylphenol polyoxyethylene acrylate (the polymerization degree of polyoxyethylene is 16). Other materials and addition amount thereof remained unchanged. The viscosity-average molecular weight of hydrophobically associated polymer obtained was measured and calculated to be 32,150,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 42 were used to prepare a polymer solution at 50°C, which has a concentration of 5000mg/L; and the dissolution time was 1.7h. The viscosity of the polymer was 76mPa • s under when the concentration of the polymer solution is 2000mg/L at the temperature 85°C and a shear rate 7.34 s⁻¹. The 2000mg/L polymer solution had a 90d viscosity retention rate of 78% at 85°C.

### Reference example 43

The steps of Example 41 were adopted, except that the mass fraction of total monomer concentration in the polymerization system was changed to 30%. Other materials and addition amount thereof remained unchanged. The viscosity-average molecular weight of hydrophobically associated polymer obtained was measured and calculated to be 29,140,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 43 were used to prepare a polymer solution at 50°C, which has a concentration of 5000mg/L; and the dissolution time was 1.7h. The viscosity of the polymer was 74mPa • s under when the concentration of the polymer solution is 2000mg/L at the temperature 85°C and a shear rate 7.34 s⁻¹. The 2000mg/L polymer solution had a 90d viscosity retention rate of 75% at 85°C.

### Reference example 44

The steps of Example 41 were adopted, except that the initiation temperature of the polymerization system was changed to 0°C. Other materials and addition amount thereof remained unchanged. The viscosity-average molecular weight of hydrophobically associated polymer obtained was measured and calculated to be 32,670,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 44 were used to prepare a polymer solution at 50°C, which has a concentration of 5000mg/L; and the dissolution time was 1.7h. The viscosity of the polymer was 74mPa • s under when the concentration of the polymer solution is 2000mg/L at the temperature 85°C and a shear rate 7.34 s⁻¹. The 2000mg/L polymer solution had a 90d viscosity retention rate of 73.2% at 85°C.

### Reference example 45

The steps of Example 41 were adopted, except that the initiation temperature of the polymerization system was changed to 5°C. Other materials and addition amount thereof remained unchanged. The viscosity-average molecular weight of hydrophobically associated polymer obtained was measured and calculated to be 27,610,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 45 were used to prepare a polymer solution at 50°C, which has a concentration of 5000mg/L; and the dissolution time was 1.6h. The viscosity of the polymer was 65mPa • s under when the concentration of the polymer solution is 2000mg/L at the temperature 85°C and a shear rate 7.34 s⁻¹. The 2000mg/L polymer solution had a 90d viscosity retention rate of 72% at 85°C.

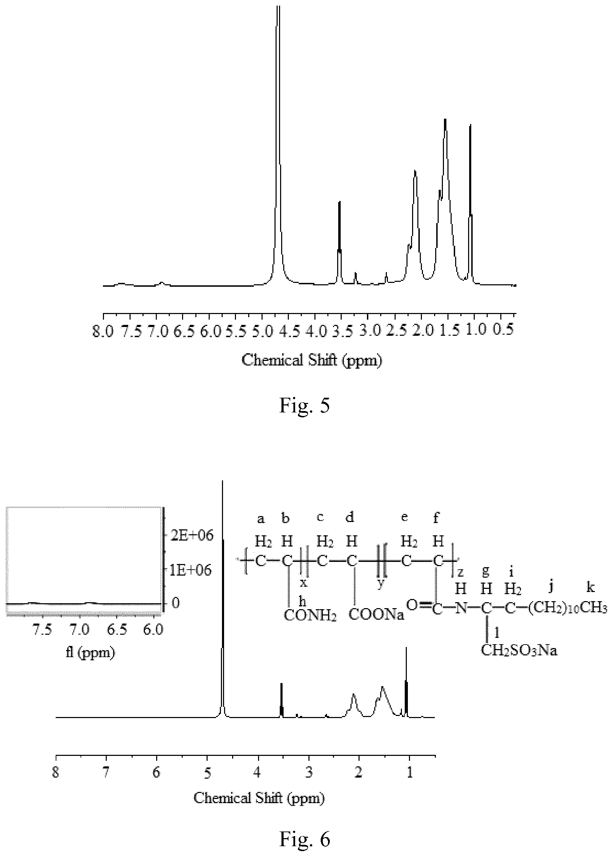

The ¹H-NMR of the product prepared was showed in Fig. 5 and the chemical shifts of H of the polymer were analyzed sequentially from high field to low field: δ0.93 was the chemical shift of hydrogen of the methyl on the alkyl chain of hydrophobic group; δ 1.17∼1.22 was the chemical shift of -CH₂ hydrogen in the alkyl chain of hydrophobic group; δ1.54, δ1.66 was the chemical shift of -CH₂ hydrogen in the structural unit -CH₂-CH- on acrylamide, sodium acrylatethe and hydrophobic monomer; δ2.10, δ2.23 were the chemical shift of -CH- hydrogen in the structural unit -CH₂-CH- on acrylamide, sodium acrylate, and hydrophobic monomer; δ3.51∼3.72 was the chemical shift of -CH₂ hydrogen connecting two N⁺ of hydrophobic group; δ3.15∼3.24 was the chemical shift of -CH₃ hydrogen directly connecting N⁺ of hydrophobic group; and δ6.88∼7.88 was the chemical shift of -CONH₂ hydrogen of acrylamide.

### Reference example 46

The steps of Example 41 were adopted, except that the addition amount of the oxidant was changed to 0.008% of the total mass of the polymerization monomer. Other materials and addition amount thereof remained unchanged. The viscosity-average molecular weight of hydrophobically associated polymer obtained was measured and calculated to be 30,170,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 46 were used to prepare a polymer solution at 50°C, which has a concentration of 5000mg/L; and the dissolution time was 1.7h. The viscosity of the polymer was 74mPa • s under when the concentration of the polymer solution is 2000mg/L at the temperature 85°C and a shear rate 7.34 s⁻¹. The 2000mg/L polymer solution had a 90d viscosity retention rate of 74.9% at 85°C.

### Reference example 47

The steps of Example 41 were adopted, except that the addition amount of the oxidant was changed to 0.012% of the total mass of the polymerization monomer. Other materials and addition amount thereof remained unchanged. The viscosity-average molecular weight of hydrophobically associated polymer obtained was measured and calculated to be 24,890,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 47 were used to prepare a polymer solution at 50°C, which has a concentration of 5000mg/L; and the dissolution time was 1.5h. The viscosity of the polymer was 74mPa • s under when the concentration of the polymer solution is 2000mg/L at the temperature 85°C and a shear rate 7.34 s⁻¹. The 2000mg/L polymer solution had a 90d viscosity retention rate of 70.3% at 85°C.

### Reference example 48

The steps of Example 41 were adopted, except that hydrophobic monomer in the polymerization system was changed from tetradecyl allyl tetramethylbutylenediamine dichloride to sodium 2-acrylamide cetylsulfonate. Other materials and addition amount thereof remained unchanged. The viscosity-average molecular weight of hydrophobically associated polymer obtained was measured and calculated to be 25,780,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 48 were used to prepare a polymer solution at 50°C, which has a concentration of 5000mg/L; and the dissolution time was 1.6h. The viscosity of the polymer was 61mPa • s under when the concentration of the polymer solution is 2000mg/L at the temperature 85°C and a shear rate 7.34 s⁻¹. The 2000mg/L polymer solution had a 90d viscosity retention rate of 78% at 85°C.

The ¹H-NMR of the product prepared was showed in Fig. 6. It can be known from Fig. 4 that: δ=6.87∼7.69ppm was the chemical shift of -NH₂ hydrogen of acrylamide; δ=4.70ppm was the chemical shift of hydrogen of the solvent D₂O; δ=3.35ppm was the chemical shift of H^{g} of hydrophobic monomer; δ=2.59∼2.67ppm was the chemical shift of H¹ of hydrophobic monomer; strong peaks δ=2.11 and 2.21ppm were the chemical shifts of methyne hydrogen of -CH₂-CH- in three monomer structural units on the main chain, i.e. H^{b}, H^{d} and H^{f}; strong peaks δ=1.54 and 1.63ppm were the chemical shift of methylene -CH₂-CH- in three monomer structural units on the main chain, i.e. H^{a}, H^{c}, H^{e}, wherein the area ratio was 1:2, matching the molar ratio of them; δ=1.14ppm was the chemical shift of H¹ in hydrophobic monomer; δ=1.05∼1.09ppm was the chemical shift of methylene H^{j} on the long chain of hydrophobic monomer; weak peak δ=0.89∼0.93ppm was the absorption peak of H^{k} in the terminal group -CH₃ of hydrophobic monomer. Based on the above analysis, it can be determined that the product was a terpolymer of acrylamide, sodium acrylate, and sodium 2-acrylamido-2-methyltetradecanesulfonate.

### Reference example 49

The steps of Example 41 were adopted, except that hydrophobic monomer in the polymerization system was changed from tetradecyl allyl tetramethylbutylenediamine dichloride to (4-acrylamido)phenyl n-butyldimethylammonium bromide. Other materials and addition amount thereof remained unchanged. The viscosity-average molecular weight of hydrophobically associated polymer obtained was measured and calculated to be 24,360,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 48 were used to prepare a polymer solution at 50°C, which has a concentration of 5000mg/L; and the dissolution time was 1.5h. The viscosity of the polymer was 58mPa • s under when the concentration of the polymer solution is 2000mg/L at the temperature 85°C and a shear rate 7.34 s⁻¹. The 2000mg/L polymer solution had a 90d viscosity retention rate of 78% at 85°C.

### Reference example 50

The steps of Example 41 were adopted, except the molar ratio of acrylamide to hydrophobic monomer in the polymerization system was changed to 98:2. Other materials and addition amount thereof remained unchanged. The viscosity-average molecular weight of hydrophobically associated polymer obtained was measured and calculated to be 26,350,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 50 were used to prepare a polymer solution at 50°C, which has a concentration of 5000mg/L; and the dissolution time was 1.8h. The viscosity of the polymer was 84mPa • s under when the concentration of the polymer solution is 2000mg/L at the temperature 85°C and a shear rate 7.34 s⁻¹. The 2000mg/L polymer solution had a 90d viscosity retention rate of 79% at 85°C.

### Reference example 51

The steps of Example 41 were adopted, except the molar ratio of acrylamide to hydrophobic monomer in the polymerization system was changed to 95:5. Other materials and addition amount thereof remained unchanged. The viscosity-average molecular weight of hydrophobically associated polymer obtained was measured and calculated to be 24,530,000 by using an Ubbelohde viscometer (0.55mm diameter) according to GB/T 12005.10-92.

Simulated salt water with a total salinity of 49,000 and a total Ca²⁺ and Mg²⁺ concentration of 2200mg/L, and hydrophobically associated polymer obtained in Example 51 were used to prepare a polymer solution at 50°C, which has a concentration of 5000mg/L; and the dissolution time was 2.4h. The viscosity of the polymer was 92mPa • s under when the concentration of the polymer solution is 2000mg/L at the temperature 85°C and a shear rate 7.34 s⁻¹. The 2000mg/L polymer solution had a 90d viscosity retention rate of 78% at 85°C.

### Reference example 52

Deionized water, ethylenediamine tetraacetic acid sodium salt, zinc chloride, urea, sodium formate, acrylamide, hydrophobic monomer tetradecyl allyl tetramethylbutanediamine dichloride, and functional monomer 2-acrylamide 2-methylpropanesulfonate were added to a 5L beaker successively per as certain feeding ratio, stirred and dissolved at room temperature to form homogenous solution. The pH of the solution was adjusted to 7 using glacial acetic acid and sodium hydroxide. The molar ratio of hydrophobic monomer and functional monomer added to acrylamide was 0.5:3:96.5 in the mixed solution; the total mass fraction of the monomers was 25%; the mass of ethylenediamine tetraacetic acid sodium salt was 0.01% percentage of the total mass of the solution; the mass percentage of urea was 0.2% of the total mass of the solution; the mass percentage of sodium formate was 0.005% of the total mass of the solution; and the concentration of zinc chloride was 1.5mol/L.

The system described above was put into icy salt water to keep the temperature at -5°C. Initiation system was added, which was consisted of ammonium persulfate (oxidant), tetramethyl ethylene diamine (co-initiator) and sodium thiosulfate (reductant), wherein the mass ratio of the oxidant, co-initiator and reductant was 1:0.75:1, and the mass of oxidant added was 0.006% of the total monomer mass in the reaction. Polymerization reaction was carried out under adiabatic environment for 4∼6h. The polymerization reaction was deemed to be basically completed when the temperature did not exceed 1°C within 30min. Colloid was taken out and cut into particles with a size of 3∼5mm. Hydrolytic reagent sodium hydroxide was added at an amount of 0.8g sodium hydroxide per 100g of colloid, mixed well and heated in a closed container to 95°C for hydrolysis for 2h. After the completion of hydrolysis, colloidal particles were dried in a forced air oven at 95°C for 30min∼1h, and white particles were obtained. The polymer particles after drying were further crushed and sieved; and dried powder with size 0.15mm∼1.18mm was the final product, i.e. hydrophobically associated polymer.

The viscosity-average molecular weight of hydrophobically associated polymer obtained was measured and calculated to be 29,080,000 by using an Ubbelohde viscometer (0.55mm diameter) according to GB/T 12005.10-92.

### Reference example 53

The steps of Example 52 were adopted, except the mass fraction of total concentration of monomer in the polymerization system was changed to 22% and hydrophobic monomer was replaced by octylphenol polyoxyethylene acrylate (the polymerization degree of polyoxyethylene is 10). Other materials and addition amounts remained unchanged. The viscosity-average molecular weight of hydrophobically associated polymer obtained was measured and calculated to be 27,560,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 53 were used to prepare a polymer solution at 45°C, which has a concentration of 5000mg/L; and the dissolution time was 2.9h. The viscosity of the polymer was 46mPa • s under when the concentration of the polymer solution is 2000mg/L at the temperature 95°C and a shear rate 7.34 s⁻¹. The 2000mg/L polymer solution had a 90d viscosity retention rate of 80% at 95°C.

### Reference example 54

The steps of Example 52 were adopted, except the mass fraction of total concentration of monomer in the polymerization system was changed to 28% and hydrophobic monomer was replaced by octylphenol polyoxyethylene acrylate (the polymerization degree of polyoxyethylene is 14). Other materials and addition amounts remained unchanged. The viscosity-average molecular weight of hydrophobically associated polymer obtained was measured and calculated to be 25,020,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 54 were used to prepare a polymer solution at 45°C, which has a concentration of 5000mg/L; and the dissolution time was 2.8h. The viscosity of the polymer was 44mPa • s under when the concentration of the polymer solution is 2000mg/L at the temperature 95°C and a shear rate 7.34 s⁻¹. The 2000mg/L polymer solution had a 90d viscosity retention rate of 78% at 95°C.

### Reference example 55

The steps of Example 52 were adopted, except that the initiation temperature of the polymerization system was changed to 0°C. Other materials and addition amounts remained unchanged. The viscosity-average molecular weight of hydrophobically associated polymer obtained was measured and calculated to be 27,650,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 55 were used to prepare a polymer solution at 45°C, which has a concentration of 5000mg/L; and the dissolution time was 2.9h. The viscosity of the polymer was 46mPa • s under when the concentration of the polymer solution is 2000mg/L at the temperature 95°C and a shear rate 7.34 s⁻¹. The 2000mg/L polymer solution had a 90d viscosity retention rate of 81% at 95°C.

### Reference example 56

The steps of Example 52 were adopted, except that the initiation temperature of the polymerization system was changed to 5°C. Other materials and addition amounts remained unchanged. The viscosity-average molecular weight of hydrophobically associated polymer obtained was measured and calculated to be 25,010,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 56 were used to prepare a polymer solution at 45°C, which has a concentration of 5000mg/L; and the dissolution time was 2.8h. The viscosity of the polymer was 43mPa • s under when the concentration of the polymer solution is 2000mg/L at the temperature 95°C and a shear rate 7.34 s⁻¹. The 2000mg/L polymer solution had a 90d viscosity retention rate of 76% at 95°C.

### Reference example 57

The steps of Example 52 were adopted, except that the amount of oxidant added was changed to 0.008% of total mass of monomer. Other materials and addition amounts remained unchanged. The viscosity-average molecular weight of hydrophobically associated polymer obtained was measured and calculated to be 27,580,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 57 were used to prepare a polymer solution at 45°C, which has a concentration of 5000mg/L; and the dissolution time was 2.9h. The viscosity of the polymer was 46mPa • s under when the concentration of the polymer solution is 2000mg/L at the temperature 95°C and a shear rate 7.34 s⁻¹. The 2000mg/L polymer solution had a 90d viscosity retention rate of 80% at 95°C.

### Reference example 58

The steps of Example 52 were adopted, except that the amount of oxidant added was changed to 0.01% of total mass of monomer. Other materials and addition amounts remained unchanged. The viscosity-average molecular weight of hydrophobically associated polymer obtained was measured and calculated to be 25,020,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 58 were used to prepare a polymer solution at 45°C, which has a concentration of 5000mg/L; and the dissolution time was 2.5h. The viscosity of the polymer was 31mPa • s under when the concentration of the polymer solution is 2000mg/L at the temperature 95°C and a shear rate 7.34 s⁻¹. The 2000mg/L polymer solution had a 90d viscosity retention rate of 74% at 95°C.

### Reference example 59

The steps of Example 52 were adopted, except that the molar ratio of hydrophobic monomer and functional monomer to acrylamide in the polymerization system was changed to 1:3:94. Other materials and addition amounts remained unchanged. The viscosity-average molecular weight of hydrophobically associated polymer obtained was measured and calculated to be 26,540,000 by using an Ubbelohde viscometer (0.55mm diameter) according to GB/T 12005.10-92.

### Reference example 60

The steps of Example 52 were adopted, except that the molar ratio of hydrophobic monomer and functional monomer to acrylamide in the polymerization system was changed to 2:3:95. Other materials and addition amounts remained unchanged. The viscosity-average molecular weight of hydrophobically associated polymer obtained was measured and calculated to be 25,030,000 by using an Ubbelohde viscometer (0.55mm diameter) according to GB/T 12005.10-92.

### Reference example 61

The steps of Example 52 were adopted, except that the hydrophobic monomer in the polymerization system was changed from docosyl allyl tetramethylbutylenediamine dibromide to (4-acrylamido) phenylisopropyldimethylammonium bromide and the molar ratio of hydrophobic monomer and functional monomer to acrylamide was changed to 0.3:1:98.7. Other materials and addition amounts remained unchanged. The viscosity-average molecular weight of hydrophobically associated polymer obtained was measured and calculated to be 25,560,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 61 were used to prepare a polymer solution at 45°C, which has a concentration of 5000mg/L; and the dissolution time was 2.5h. The viscosity of the polymer was 31mPa • s under when the concentration of the polymer solution is 2000mg/L at the temperature 95°C and a shear rate 7.34 s⁻¹. The 2000mg/L polymer solution had a 90d viscosity retention rate of 72% at 95°C.

### Reference example 62

The steps of Example 52 were adopted, except that the hydrophobic monomer in the polymerization system was changed from docosyl allyl tetramethylbutylenediamine dibromide to 2-acrylamidododecylbenzene sulfonate sodium and the molar ratio of hydrophobic monomer and functional monomer to acrylamide was changed to 0.3:1:98.7. Other materials and addition amounts remained unchanged. The viscosity-average molecular weight of hydrophobically associated polymer obtained was measured and calculated to be 24,890,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 62 were used to prepare a polymer solution at 45°C, which has a concentration of 5000mg/L; and the dissolution time was 2.5h. The viscosity of the polymer was 34mPa • s under when the concentration of the polymer solution is 2000mg/L at the temperature 95°C and a shear rate 7.34 s⁻¹. The 2000mg/L polymer solution had a 90d viscosity retention rate of 73% at 95°C.

### Reference example 63

The steps of Example 52 were adopted, except that the hydrophobic monomer in the polymerization system was changed from 2-acrylamide 2-methylpropanesulfonate sodium to N-vinylpyrrolidone and the molar ratio of hydrophobic monomer and functional monomer to acrylamide was changed to 0.3:1:98.7. Other materials and addition amounts remained unchanged. The viscosity-average molecular weight of hydrophobically associated polymer obtained was measured and calculated to be 26,390,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 63 were used to prepare a polymer solution at 45°C, which has a concentration of 5000mg/L; and the dissolution time was 2.5h. The viscosity of the polymer was 33mPa • s under when the concentration of the polymer solution is 2000mg/L at the temperature 95°C and a shear rate 7.34 s⁻¹. The 2000mg/L polymer solution had a 90d viscosity retention rate of 72% at 95°C.

The Fourier transform infrared spectroscopy of the polymer of Example 63 was shown in Fig. 10: 3590 cm⁻¹ and 3190cm⁻¹ were attributed to asymmetric and symmetric stretching vibration peak of N-H bond; 2925 cm⁻¹ and 1452 cm⁻¹ were attributed to the stretching vibration peak and bending vibration peak of C-H bond; 1670 cm⁻¹ was attributed to the stretching vibration peak of amide I band C=O; 1610 cm⁻¹ was attributed to the bending vibration peak of amide II band N-H; 1410 cm⁻¹ was attributed to the stretching vibration peak of C-O; 1315 cm⁻¹ was attributed to the stretching vibration peak of C-N; and 1183 cm⁻¹ was attributed to the stretching vibration peak of S=O. Based on the above data, it can be seen that the polymer obtained contains amide group and carboxyl group.

### Reference example 64

The steps of Example 52 were adopted, except that the hydrophobic monomer in the polymerization system was changed from 2-acrylamide 2-methylpropanesulfonate sodium to sodium styrene sulfonate and the molar ratio of hydrophobic monomer and functional monomer to acrylamide was changed to 0.3:1:98.7. Other materials and addition amounts remained unchanged. The viscosity-average molecular weight of hydrophobically associated polymer obtained was measured and calculated to be 25,330,000 by using an Ubbelohde viscometer (0.55mm diameter) according to GB/T 12005.10-92.

Simulated salt water with a total salinity of 50,000 and a total Ca²⁺ and Mg²⁺ concentration of 2400mg/L, and hydrophobically associated polymer obtained in Example 64 were used to prepare a polymer solution at 45°C, which has a concentration of 5000mg/L; and the dissolution time was 2.5h. The viscosity of the polymer was 37mPa • s under when the concentration of the polymer solution is 2000mg/L at the temperature 95°C and a shear rate 7.34 s⁻¹. The 2000mg/L polymer solution had a 90d viscosity retention rate of 78% at 95°C.

### Reference example 65

The steps of Example 52 were adopted, except that the molar ratio of hydrophobic monomer and functional monomer to acrylamide in the polymerization system was changed to 0.1:5:94.9. Other materials and addition amounts remained unchanged. The viscosity-average molecular weight of hydrophobically associated polymer obtained was measured and calculated to be 28,790,000 by using an Ubbelohde viscometer (0.55mm diameter) according to

GB/T 12005.10-92.

### Reference example 66

The steps of Example 52 were adopted, except that the molar ratio of hydrophobic monomer and functional monomer to acrylamide in the polymerization system was changed to 0.1:10:89.9. Other materials and addition amounts remained unchanged. The viscosity-average molecular weight of hydrophobically associated polymer obtained was measured and calculated to be 25,680,000 by using an Ubbelohde viscometer (0.55mm diameter) according to GB/T 12005.10-92.

### Reference example 67

The dissolution time of the hydrophobically associated polymer according to Example 37 was tested. The specific test method was: at room temperature (25°C), 500g clear water was measured and poured into a vessel with stirrer. The stirrer was started and the rotation speed of the stirrer was adjusted so that a vortex formed reached to the bottom of the vessel. 2g hydrophobically associated polymer dry powder, based on 0.4% of concentration of the hydrophobic polymer, was weighed and slowly added to the water. Dry powder should be added along the edge of the whirlpool, so that dry powder and water fully mixed to avoid the phenomenon of agglomeration. The viscosity of the associated polymer solution at 170s⁻¹ shear rate was measured at room temperature (25°C) at different agitation times using a six-speed rotational viscometer until the viscosity remained constant. The test results are shown in Table 1. The dissolution time of the associated polymer was about 2∼4min.

**Table 1. Test of dissolution time of the hydrophobically associated polymer obtained in Example 37.**

| | | | | | | | | |
|---|---|---|---|---|---|---|---|---|
| time, min | 0.5 | 1 | 1.5 | 2 | 4 | 6 | 8 | 10 |
| viscosity, mPa.s | 42 | 89 | 120 | 132 | 145 | 141 | 145 | 144 |

The tackifying capacity of the associated polymer according to Example 37 was determined. The specific test method was: 500g clear water was measured and poured into a vessel with stirrer. The stirrer was started and the rotation speed of the stirrer was adjusted so that a vortex formed reached to the bottom of the vessel. Associated polymer was weighted according to the concentration of associated polymer solution and slowly added to water; dry powder should be added along the whirlpool, so that dry powder mixed with water fully to avoid the phenomenon of agglomeration. Stirring was performed for 10-20min to obtain the associated polymer solution. The viscosity of the associated polymer solution at 170s⁻¹ shear rate was measured at room temperature (25°C) at different agitation times using a six-speed rotational viscometer and the tackifying capacity of the associated polymer was shown in Table 2.

**Table 2. Test of tackifying capacity of the hydrophobically associated polymer obtained in Example 37.**

| | | | | | | | | |
|---|---|---|---|---|---|---|---|---|
| concentration of associated polymer | 0.10% | 0.15% | 0.20% | 0.25% | 0.30% | 0.35% | 0.40% | 0.45% |
| viscosity, mPa.s | 9 | 18 | 36 | 51 | 84 | 114 | 141 | 180 |

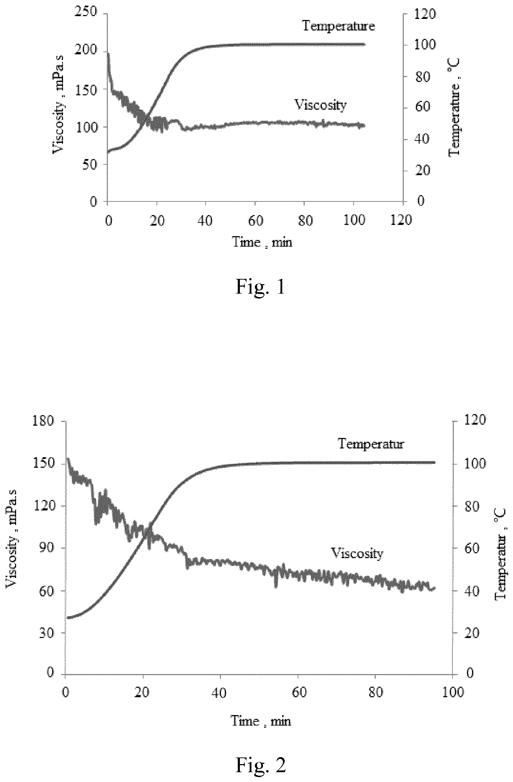

The temperature and shear resistance, residue content and core matrix damage rate of the associated non-crosslinked fracturing fluid (0.4% associated polymer + 1% KCl) prepared by the associated polymer of Example 37 as thickener were tested. The system was specifically formulated as the following: 500g clear water was measured and poured into a vessel with stirrer. The stirrer was started and the rotation speed of the stirrer was adjusted so that a vortex formed reached to the bottom of the vessel. Associated polymer was weighted according to the concentration of associated polymer solution and slowly added to water; dry powder should be added along the whirlpool, so that dry powder mixed with water fully to avoid the phenomenon of agglomeration. Stirring was performed for 10-20min. After the associated polymer was dissolved thoroughly, 5g potassium chloride was added and stirring was performed for further 5∼10min until the solution was evenly to yield the associated non-crosslinked fracturing fluid. The performances of the fracturing fluid were tested according to the test methods for temperature and shear resistance, gel broken fluid residue and core matrix damage rate in "SY/T5107-2005 the evaluation criterion on performance of water-base fracturing fluid". The results were shown in Fig. 1, Table 3 and Table 4. It can be found from Fig. 1 that when the temperature was constant, the viscosity of the fracturing fluid was kept substantively constant with the extension of the shear time, demonstrating a better shear resistance performance. It can be found from Table 3 and Table 4 that said fracturing fluid has characteristics of low residue and low damage.

**Table 3. Test of gel broken fluid residue content of associated non-crosslinked fracturing fluid.**

| number | residue content, mg/L | average residue content, mg/L |
|---|---|---|
| 1# | 39 | 40.5 |
| 2# | 42 | |

**Table 4. Test of core matrix permeability and damage rate of associated non-crosslinked fracturing fluid.**

| number | original permeability K₁ (×10⁻³µm²) | permeability after damage K₂ (×10⁻³µm²) | matrix damage rate η (%) |
|---|---|---|---|
| 1# | 20.09 | 18.46 | 8.11% |
| 2# | 34.58 | 31.07 | 10.15% |

### Reference example 68

Referring to the method in Example 67, the dissolution times of 4% hydrophobically associated polymer of Example 23 were tested. The dissolution time of the associated polymer was about 3∼4min.

**Table 5. Test of dissolution times of the hydrophobically associated polymer obtained in Example 23.**

| | | | | | | | | |
|---|---|---|---|---|---|---|---|---|
| time, min | 0.5 | 1 | 1.5 | 2 | 4 | 6 | 8 | 10 |
| viscosity, mPa.s | 15 | 36 | 51 | 63 | 81 | 84 | 84 | 81 |

Referring to the method in Example 67, the tackifying capacity of the hydrophobically associated polymer of Example 23 was tested. The tackifying capacity of the hydrophobically associated polymer was shown in Table 6.

**Table 6. Test results of tackifying capacity of the hydrophobically associated polymer obtained in Example 23.**

| | | | | | | | |
|---|---|---|---|---|---|---|---|
| concentration of associated polymer | 0.10% | 0.2% | 0.30% | 0.4% | 0.5% | 0.6% | 0.7% |
| viscosity, mPa.s | 6 | 24 | 48 | 81 | 114 | 162 | 225 |

Referring to the method in Example 67, the temperature and shear resistance, residue content and core matrix damage rate of the associated non-crosslinked fracturing fluid (0.5% associated polymer + 1% KCl) prepared by the associated polymer of Example 23 as thickener were tested. The results were shown in Fig. 2, Table 7 and Table 8. It can be found from Fig. 2 that when the temperature was constant, the viscosity of the fracturing fluid was kept substantively constant with the extension of the shear time, demonstrating a better shear resistance performance. It can be found from Table 7 and Table 8 that the fracturing fluid, like that of Example 67, has characteristics of low residue and low damage.

**Table 7. Test of gel broken fluid residue content of associated non-crosslinked fracturing fluid.**

| number | residue content, mg/L | average residue content, mg/L |
|---|---|---|
| 1# | 18.7 | 18.9 |
| 2# | 19.1 | |

**Table 8. Test of core matrix permeability and damage rate of associated non-crosslinked fracturing fluid.**

| number | original permeability K₁ (×10⁻³µm²) | permeability after damage K₂ (×10⁻³µm²) | matrix damage Rate η (%) |
|---|---|---|---|
| 1# | 30.09 | 27.86 | 7.41% |
| 2# | 25.58 | 23.07 | 9.93% |

### Reference example 69

A resistance-reducing water fracturing fluid system, which is suitable for the volume reformation of unconventional oil and gas reservoir, consists of 0.04% associated polymer thickener, 0.10% enhancer, 1% anti-swelling agent and clear water, wherein the associated polymer thickener is the hydrophobically associated polymer prepared in Example 59, and the anti-swelling agent is potassium chloride or other clay stabilizers having a function of preventing swelling of the clay.

Solution preparation process: clear water was taken according to the volume amount for preparing the resistance-reducing water. Associated polymer thickener was added based on the above ratio and stirred for 8min; then enhancer and anti-swelling agent were added according to the ratio, continued to stir for 2min to obtain the resistance-reducing water fracturing fluid which is suitable for the volume reformation of unconventional oil and gas reservoir.

Under the same conditions: (1) the viscosity of resistance-reducing water in the system was equivalent to similar products Schlumberger resistance-reducing water fracturing fluid J313, which were 7.6mPa.s and 7.9mPa.s, respectively; having a low viscosity, making it easy to access the stratum and link up natural cracks, increasing the volume of reservoir reformation; (2) the resistance reduction rate of the system was 70%, increasing 8% compared to J313; thus has a highly efficient resistant reduction function and can more effectively reduce the construction friction.

### Reference example 70

A resistance-reducing water fracturing fluid system, which is suitable for the volume reformation of unconventional oil and gas reservoir, consists of 0.04% associated polymer thickener, 0.10% enhancer, 1% anti-swelling agent and clear water, wherein the associated polymer thickener is the hydrophobically associated polymer prepared in Example 16, and the anti-swelling agent is potassium chloride or other clay stabilizers having a function of preventing swelling of the clay.

Solution preparation process: clear water was taken according to the volume amount for preparing the resistance-reducing water. Associated polymer thickener was added based on the above ratio and stirred for 8min; then enhancer and anti-swelling agent were added according to the ratio, continued to stir for 2min to obtain the resistance-reducing water fracturing fluid which is suitable for the volume reformation of unconventional oil and gas reservoir.

Under the same conditions: (1) the viscosity of resistance-reducing water in the system was 11.5mPa.s and the sand-carrying capacity increased 48% compared to similar products Schlumberger resistance-reducing water fracturing fluid J313; (2) the resistance-reducing rate of the resistance-reducing water in the system was 68%, increasing nearly 5% compared to J313; thus has a highly efficient resistant reduction function and can more effectively reduce the construction friction.

### Reference example 71

A resistance-reducing water fracturing fluid system, which is suitable for the volume reformation of unconventional oil and gas reservoir, consists of 0.08% associated polymer thickener, 0.15% enhancer, 1% anti-swelling agent and clear water, wherein the associated polymer thickener is the hydrophobically associated polymer prepared in Example 24, and the anti-swelling agent is potassium chloride or other clay stabilizers having a function of preventing swelling of the clay.

Solution preparation process: clear water was taken according to the volume amount for preparing the resistance-reducing water. Associated polymer thickener was added based on the above ratio and stirred for 8min; then enhancer and anti-swelling agent were added according to the ratio, continued to stir for 2min to obtain the resistance-reducing water fracturing fluid which is suitable for the volume reformation of unconventional oil and gas reservoir.

Under the same conditions: (1) the viscosity of resistance-reducing water in the system was 25mPa.s and the sand-carrying capacity increased 152% compared to similar products Schlumberger resistance-reducing water fracturing fluid J313; (2) the resistance-reducing rate of the resistance-reducing water in the system was 65%, equivalent to J313; thus has a highly efficient resistant reduction function and can reduce the construction friction.

### Reference example 72

A resistance-reducing water fracturing fluid system, which is suitable for the volume reformation of unconventional oil and gas reservoir, consists of 0.015% associated polymer thickener, 0.05% enhancer, 1% anti-swelling agent and clear water, wherein the associated polymer thickener is the hydrophobically associated polymer prepared in Example 41, and the anti-swelling agent is potassium chloride or other clay stabilizers having a function of preventing swelling of the clay.

Solution preparation process: clear water was taken according to the volume amount for preparing the resistance-reducing water. Associated polymer thickener was added based on the above ratio and stirred for 8min; then enhancer and anti-swelling agent were added according to the ratio, continued to stir for 2min to obtain the resistance-reducing water fracturing fluid which is suitable for the volume reformation of unconventional oil and gas reservoir.

Under the same conditions: (1) the viscosity of resistance-reducing water in the system was equivalent to similar products Schlumberger resistance-reducing water fracturing fluid J313, which were 6.3mPa.s and 7.9mPa.s, respectively; having a low viscosity, making it easy to access the stratum and link up natural cracks, increasing the volume of reservoir reformation; (2) the resistance reduction rate of the system was 71%, increasing 9% compared to J313; thus has a highly efficient resistant reduction function and can more effectively reduce the construction friction.

### Reference example 73: Non-crosslinked gel plugging application example

The hydrophobically associated polymer synthesized in Example 60 was dissolved in tap water at 30°C for 2∼4h to make the mother liquor; the mother liquor was allowed to stand for over 12h and then diluted with tap water to a target solution (polymer concentration: 0.8%∼1.5%), i.e., formulated by 0.8∼1.5% polymer and 98.5∼99.2% tap water. At the same time, HPAM (M=2500x10⁴) was selected and the same target solution was prepared in the same manner. At 50°C∼80°C, the static shear, anti-water-immersion capacity and pressure bearing capacity of the hydrophobically associated polymer prepared by Example 60 were significantly better than those of HPAM, wherein, the conditions for static shear test is as following: the solution was preheated to the desired temperature and stirred for 10sec under the rotation rate of 600r / min of the flow rate viscometer. The initial shear force (static shear force) was the product of maximum reading at a speed of 3r/min multiplied by the instrument factor 0.511. The evaluation method for anti-water-immersion capacity was as following: simulated water (TDS=246,000 simulated salt water) and a prepared sample were added into a 1000ml graduated cylinder at a ratio of 1:1, sealed and placed in an oven at certain temperature. The experimental phenomenon was observed at set intervals. The evaluation method for the pressure bearing capacity was as the following: using self-modified HTHP filter tester, a certain number of steel balls (Φ12mm) were added to the sample tank, and then a certain amount of gel was added, so that the gel just filled the gaps between steel balls; the tank was sealed; the sample tank was put into an oven at certain temperature, aging 24h; then the pressure bearing capacity thereof was measured. When the polymer concentration was 1.2%, the experimental data of the two performances was shown in Table 9.

**Table 9. performance comparison between hydrophobically associated polymer prepared in Example 60 and HPAM.**

| name of polymer | temperature/°C | static shear/Pa | anti-water-immersion capacity | pressure bearing capacity / MPa•m⁻¹ |
|---|---|---|---|---|
| Hydrophobically associated polymer prepared in Example 60 | 50 | 92 | no any mix with simulated water within 7d | 0.0146 |
| | 65 | 83 | no any mix with simulated water within 3d; about 1/2 gel mixed with simulated water at 7d | 0.0073 |
| | 80 | 78 | no any mix with simulated water within 24h; completely mixed at 3d | |
| HPAM | 50 | 35 | completely mixed with simulated water within 24h | 0.0073 |
| | 65 | 29 | | 0 |
| | 80 | 23 | | 0 |

### Reference example 74: Non-crosslinked gel plugging application example

Referring to the experimental methods in application Example 73, the static shear, anti-water-immersion capacity and pressure bearing capacity of the hydrophobically associated polymer prepared in Example 59 and HPAM (M=2500x10⁴) were evaluated. The experimental results showed that, at 50°C∼80°C, the static shear, anti-water-immersion capacity and pressure bearing capacity of the hydrophobically associated polymer prepared in Example 59 were significantly better than those of HPAM. When the polymer concentration was 1.2%, the experimental data of the two performances was shown in Table 10.

**Table 10. performance comparison between hydrophobically associated polymer prepared in Example 59 and HPAM.**

| name of polymer | temperature /°C | static shear /Pa | anti-immersion capacity | pressure bearing capacity / MPa•m⁻¹ |
|---|---|---|---|---|
| hydrophobically associated polymer of Example 59 | 50 | 103 | no any mix with simulated water within 7d | 0.0219 |
| | 65 | 98 | | |
| | 80 | 94 | | 0.0146 |
| HPAM | 50 | 29 | completely mixed with simulated water within 24h | 0.0073 |
| | 65 | 23 | | 0 |
| | 80 | 11 | | 0 |

### Reference example 75: crosslinked gel plugging application example

The hydrophobically associated polymer synthesized in Example 28 was dissolved in tap water at 30°C for 2∼4h to make the mother liquor; the mother liquor was allowed to stand for over 12h and then diluted with tap water, and appropriate amount of cross-linking agent (polymer concentration: 0.8%∼1.5%) was added, i.e., formulated by 0.8∼1.5% polymer, 0.2∼1.0% cross-linking agent and 98.5∼99.2% tap water. At 50°C∼95°C, the gelation time of the hydrophobically associated polymer prepared in Example 28 was controllable (0.5∼24h), the gelation strength was controllable; and the anti-water-immersion capacity and pressure bearing capacity were both excellent, wherein, the gelation strength was characterized by visual inspection and pressure bearing capacity. Evaluation methods for anti-water-immersion capacity and pressure bearing capacity referred to Example 73 for non-crosslinked gel plugging application. When the polymer concentration was 1.2% and cross-linking agent concentration was 0.6%, the experimental data of the two performances was shown in Table 11.

**Table 11. Performances of the hydrophobically associated polymer prepared in Example 28.**

| name of polymer | temperature/°C | gelation strength | anti-water-immersion capacity | pressure bearing capacity / MPa•m⁻¹ |
|---|---|---|---|---|
| the hydrophobically associated polymer prepared in Example 28 | 50 | the sample completely losed its fluidity, i.e., it is completely tongueless when it was inverted; and could maintain the final gelation strength for up to 90 days | No any mix with simulated water within 7d | 3.629 |
| | 65 | | | 2.526 |
| | 80 | | | 1.544 |
| | 95 | | | 1.323 |

### Reference example 76: crosslinked gel plugging application example

Based on solid content, (8/s)g of the hydrophobically associated polymer dry powder prepared in Example 30 was added to (400-2/s)g of simulated salt water (TDS=15690mg/L, Ca²⁺&Mg²⁺=621.5mg/L). The mixture was put in a 65°C water bath and placed under a vertical stirrer, dissolved at 400RPM to obtain a polymer mother liquor of 10000 mg/L, which was allowed to stand for one night and diluted with the same simulated salt water to different concentrations of target polymer solutions (For the same concentrations of HPAM (M=2500^{∗}10⁴) solutions, the preparation method was the same). Using brookfield viscometer at 65°C and shear rate 7.34s⁻¹, highly associated polymer showed super strong tackifying capacity; apparent viscosity of 5000mg/L of the target solution was 12344mPa.s (the solution may be tilt, with tongue rebound) and apparent viscosity of HPAM was 644mPa.s. The target solution of highly associated polymer, obtained by Waring stirrer at 110 V and setting I for 20s, showed a shear recovery capability with a recovery time of 4h, a viscosity retention rate of 98.12%, while that of HPAM was 36.80%. Rheometers and static shear tests showed that highly associated polymer has superstructure, elastic main polymer. After aging by nitrogen charging and deoxygenation at 65°C for 180d, the viscosity retention rate of aged highly associated polymer was 89.72% and that of HPAM was 28.34%. According to SY/T5590-2004 〈〈Performance Evaluation Methods of Profile Control Agents, the physically cross-linked highly associated polymer (5000mg/L) was measured to have a breaking pressure gradient higher than 1.9Mpa/m, a plugging ratio ≥98.2%, a salt-water-erosion resistance ≥20PV, a stability in porous media ≥180d and an increase of oil displacement efficiency by 21.32%.

### Reference example 77: crosslinked gel plugging application example

Basic conditions of oil reservoir: simulated salt water (TDS=5000∼45000mg/L, Ca²⁺&Mg²⁺=200∼1000mg/L) at a temperature of 40°C∼120°C. According to solid content, (2/s)g of the hydrophobically associated polymer dry powder prepared in Example 17 was taken and added to (400-2/s)g of simulated salt water, heated in a 40°C∼120°C water bath and placed under a vertical stirrer and dissolved at 400RPM to obtain a polymer mother liquor, which was allowed to stand for one night and diluted with the same simulated salt water to different concentrations of target polymer solutions for further use (For the same concentrations of HPAM (M=2500^{∗}104) solutions, the preparation method was the same). Under different temperatures and salinities, by using brookfield viscometer at a shear rate of 7.34s⁻¹, the associated polymer before cross-linking showed better temperature resistance, salt resistance and water-dilution resistance, compared to HPAM. After cross-linking, the associated polymer solution had a controllable cross-linking time of 12∼144h, and a controllable strength of 5000-90000 mPa.s. Mechanical shear or porous media shear had less effect on the cross-linking time and cross-linking strength of the associated polymer after cross-linking. The aging stability of the associated polymer after cross-linking was ≥120d. According to SY/T5590-2004 〈〈Performance Evaluation Methods of Profile Control Agents〉〉, the associated polymer after cross-linking was measured to have a breaking pressure gradient ≥2.92Mpa/m, a plugging ratio ≥99%, a selective plugging ratio ≥90%, a salt-water-erosion resistance ≥30PV, a stability in porous media ≥120d, and an increase of oil displacement efficiency by 19.34%.

### Reference example 78

According to solid content, (2/s)g of the hydrophobically associated polymer dry powder prepared in Example 10 was taken and added to (400-2/s)g of simulated salt water (TDS=49974mg/L, Ca²⁺&Mg²⁺=2004.85mg/L), heated in a 45°C water bath and placed under a vertical stirrer and dissolved at 400RPM to prepare a polymer mother liquor of 5000mg/L, which was allowed to stand for one night and diluted with the same simulated salt water to obtain the target polymer solution with a concentration of 2000mg/L for further use (For the same concentrations of HPAM (M=2500^{∗}10⁴) solutions, the preparation method was the same). By using brookfield viscometer at 85°C and a shear rate of 7.34s⁻¹, the apparent viscosity was measured to be 23.82mPa.s for target solution of newly synthesized polymer and 6.75mPa.s for HPAM. By using Waring stirrer at 110 V and setting I for 20s, the viscosity retention rate was measured to be 63.21% for target solution of newly synthesized polymer and 36.80% for HPAM. After aging by nitrogen charging and deoxygenation at 85°C for 90d, the aging viscosity retention rate was measured to be 53.72% for aged newly synthesized polymer and 18.39% for HPAM. According to the methods for testing static adsorption viscosity retention rate in SY/T5862-2008, the newly synthesized polymer obtained was 80.60% and HPAM was 85.30%. Under the condition of simulated salt water at 85°C, by adopting artificial core of ϕ2.5^{∗}10cm (K_{gas}=100mD) and an injection speed of 3m/d, the resistance coefficient F_{R} of the synthesized polymer was measured to be 162.53, the residual resistance factor F_{RR} was measured to be 54.82, while for HPAM, they were 51.52 and 13.33, respectively. Under the conditions of 85°C, injection speed 3m/d, water content 98% to polymer injection, and polymer injection amount 0.3PV, the results of macroscopic physical oil displacement model showed that the newly synthesized polymer increased recovery efficiency by 15.42%, while HPAM increased 8.91%.

### Reference example 79

According to solid content, (2/s)g of the hydrophobically associated polymer dry powder prepared in Example 31 was taken and added to (400-2/s)g of simulated salt water (TDS=30664mg/L, Ca²⁺&Mg²⁺=2135.85mg/L), heated in a 45°C water bath and placed under a vertical stirrer and dissolved at 400RPM to prepare a polymer mother liquor of 5000mg/L, which was allowed to stand for one night and diluted with the same simulated salt water to obtain the target polymer solution with a concentration of 2000mg/L for further use (For the same concentrations of HPAM (M=2500^{∗}10⁴) solutions, the preparation method was the same). By using brookfield viscometer at 80°C and a shear rate of 7.34s⁻¹, the apparent viscosity was measured to be 102.95mPa.s for target solution of newly synthesized polymer and 14.42mPa.s for HPAM. By using Waring stirrer at 110 V and setting I for 20s, the viscosity retention rate was measured to be 80.62% for target solution of newly synthesized polymer and 35.40% for HPAM. After aging by nitrogen charging and deoxygenation at 80°C for 90d, the aging viscosity retention rate was measured to be 63.60% for aged newly synthesized polymer and 40.01% for HPAM. According to the methods for testing static adsorption viscosity retention rate in SY/T5862-2008, the newly synthesized polymer obtained was 73.02% and HPAM was 78.00%. Under the condition of simulated salt water at 80°C, by adopting artificial core of ϕ2.5^{∗}10cm (K_{gas}=2500mD) and an injection speed of 3m/d, the resistance coefficient F_{R} of the synthesized polymer was measured to be 38.83, the residual resistance factor F_{RR} was measured to be 11.42, while for HPAM, they were 17.22 and 3.29, respectively. Under the conditions of 80°C, injection speed 3m/d, water content 98% to polymer injection, and polymer injection amount 0.3PV, the results of macroscopic physical oil displacement model showed that the newly synthesized polymer increased recovery efficiency by 20.42%, while HPAM increased 10.11%.

### Reference example 80

According to solid content, (2/s)g of the hydrophobically associated polymer dry powder prepared in Example 52 was taken and added to (400-2/s)g of simulated salt water (TDS=49528mg/L, Ca²⁺&Mg²⁺=2034.85mg/L), heated in a 45°C water bath and placed under a vertical stirrer and dissolved at 400RPM to prepare a polymer mother liquor of 5000mg/L, which was allowed to stand for one night and diluted with the same simulated salt water to obtain the target polymer solution with a concentration of 1500mg/L for further use (For the same concentrations of HPAM (M=2500^{∗}10⁴) solutions, the preparation method was the same). By using brookfield viscometer at 90°C and a shear rate of 7.34s⁻¹, the apparent viscosity was measured to be 48.05mPa.s for target solution of newly synthesized polymer and 7.55mPa.s for HPAM. By using Waring stirrer at 110 V and setting I for 20s, the viscosity retention rate was measured to be 73.74% for target solution of newly synthesized polymer and 46.28% for HPAM. After aging by nitrogen charging and deoxygenation at 90°C for 90d, the aging viscosity retention rate was measured to be 63.72% for aged newly synthesized polymer and 15.39% for HPAM. According to the methods for testing static adsorption viscosity retention rate in SY/T5862-2008, the newly synthesized polymer obtained was 74.30% and HPAM was 85.60%. Under the condition of simulated salt water at 90°C, by adopting artificial core of ϕ2.5^{∗}10cm (K_{gas}=1500mD) and an injection speed of 3m/d, the resistance coefficient F_{R} of the synthesized polymer was measured to be 80.21, the residual resistance factor F_{RR} was measured to be 26.82, while for HPAM, they were 11.52 and 3.69, respectively. Under the conditions of 90°C, injection speed 3m/d, water content 98% to polymer injection, and polymer injection amount 0.3PV, the results of macroscopic physical oil displacement model showed that the newly synthesized polymer increased recovery efficiency by 19.12%, while HPAM increased 11.23%.

### Reference example 81

According to solid content, (2/s)g of the hydrophobically associated polymer dry powder prepared in Example 65 was taken and added to (400-2/s)g of simulated salt water (TDS=93664mg/L, Ca²⁺&Mg²⁺=1945.85mg/L), heated in a 45°C water bath and placed under a vertical stirrer and dissolved at 400RPM to prepare a polymer mother liquor of 5000mg/L, which was allowed to stand for one night and diluted with the same simulated salt water to obtain the target polymer solution with a concentration of 2000mg/L for further use (For the same concentrations of HPAM (M=2500^{∗}10⁴) solutions, the preparation method was the same). By using brookfield viscometer at 85°C and a shear rate of 7.34s⁻¹, the apparent viscosity was measured to be 45.82mPa.s for target solution of newly synthesized polymer and 4.35mPa.s for HPAM. By using Waring stirrer at 110 V and setting I for 20s, the viscosity retention rate was measured to be 53.21% for target solution of newly synthesized polymer and 17.20% for HPAM. After aging by nitrogen charging and deoxygenation at 85°C for 90d, the aging viscosity retention rate was measured to be 70.72% for aged newly synthesized polymer and 20.09% for HPAM. According to the methods for testing static adsorption viscosity retention rate in SY/T5862-2008, the newly synthesized polymer obtained was 74.46% and HPAM was 82.20%. Under the condition of simulated salt water at 85°C, by adopting artificial core of ϕ2.5^{∗}10cm (K_{gas}=1500mD) and an injection speed of 3m/d, the resistance coefficient F_{R} of the synthesized polymer was measured to be 60.53, the residual resistance factor F_{RR} was measured to be 25.52, while for HPAM, they were 13.02 and 3.69, respectively. Under the conditions of 85°C, injection speed 3m/d, water content 98% to polymer injection, and polymer injection amount 0.3PV, the results of macroscopic physical oil displacement model showed that the newly synthesized polymer increased recovery efficiency by 18.52%, while HPAM increased 6.91%.

### Reference example 82

According to solid content, (2/s)g of the hydrophobically associated polymer dry powder prepared in Example 66 was taken and added to (400-2/s)g of simulated salt water (TDS=93664mg/L, Ca²⁺&Mg²⁺=1945.85mg/L), heated in a 45°C water bath and placed under a vertical stirrer and dissolved at 400RPM to prepare a polymer mother liquor of 5000mg/L, which was allowed to stand for one night and diluted with the same simulated salt water to obtain the target polymer solution with a concentration of 2000mg/L for further use (For the same concentrations of HPAM (M=2500^{∗}10⁴) solutions, the preparation method was the same). By using brookfield viscometer at 85°C and a shear rate of 7.34s⁻¹, the apparent viscosity was measured to be 58.22mPa.s for target solution of newly synthesized polymer and 4.35mPa.s for HPAM. By using Waring stirrer at 110 V and setting I for 20s, the viscosity retention rate was measured to be 50.49% for target solution of newly synthesized polymer and 17.20% for HPAM. After aging by nitrogen charging and deoxygenation at 85°C for 90d, the aging viscosity retention rate was measured to be 61.12% for aged newly synthesized polymer and 20.09% for HPAM. According to the methods for testing static adsorption viscosity retention rate in SY/T5862-2008, the newly synthesized polymer obtained was 68.46% and HPAM was 82.20%. Under the condition of simulated salt water at 85°C, by adopting artificial core of ϕ2.5^{∗}10cm (K_{gas}=1500mD) and an injection speed of 3m/d, the resistance coefficient F_{R} of the synthesized polymer was measured to be 67.71, the residual resistance factor F_{RR} was measured to be 35.38, while for HPAM, they were 13.02 and 3.69, respectively. Under the conditions of 85°C, injection speed 3m/d, water content 98% to polymer injection, and polymer injection amount 0.3PV, the results of macroscopic physical oil displacement model showed that the newly synthesized polymer increased recovery efficiency by 20.77%, while HPAM increased 6.91%.

## Claims

1. A hydrophobically associated polymer, comprising
- repeating units represented by formulas (I) and (II): 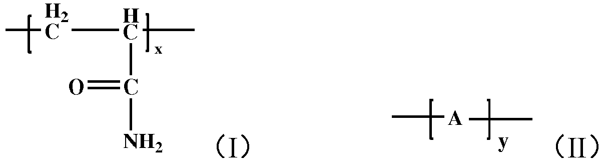 wherein, x:y= 1:(0.005∼0.01); said A is the monomer unit of hydrophobic monomer; said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate; and the viscosity-average molecular weight of said hydrophobically associated polymer, measured and calculated by using an Ubbelohde viscometer (0.55mm diameter) according to GB/T 12005.10-92, is 5,000,000∼35,000,000; wherein said allylalkyl quaternary ammonium salts are selected from 2-methacryloyloxyethyl-dimethyldodecylammonium bromide, dodecyl allyl tetramethylbutylenediammonium dibromide, tetradecyl allyl tetramethylbutylenediammonium dichloride, dodecyldipropyl allyl ammonium chloride.
- repeating unit represented by formula (III): 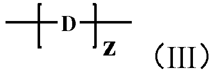 wherein x:z=1:(0.01∼0.03); said D is monomer unit of functional monomer; said functional monomer is selected from one or more of sulfonic acid derivatives containing a terminal alkenyl group and sulfonate salt derivatives thereof, and heterocyclic derivatives containing a terminal alkenyl group;
- repeating unit represented by formula (IV): 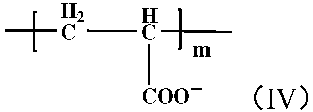 wherein x:m=1:(0.1∼0.20);

2. The hydrophobically associated polymer of claim 1, **characterized in that**, the number of carbon atoms in alkyl group in N-alkyl substituted acrylamide and derivatives thereof, alkyl acrylate, alkyl methacrylate, allylalkyl quaternary ammonium salts, acrylic acid alkyl sulfonic acid and sulfonate salts thereof, alkylphenol polyoxyethylene acrylate, polyoxyethylene alkyl acrylate, fluoro-substituted alkyl acrylate and fluoro-substituted alkyl methacrylate is each independently 4∼40.

3. The hydrophobically associated polymer of claim 1, **characterized in that**, said hydrophobic monomer is selected from one or more of 2-(N-ethyl perfluorosulfonic acid amine) ethyl methacrylate, 2-(N-ethyl perfluorooctane) butyl methacrylate, dodecyl acrylate, cetyl acrylate, octadecyl acrylate, dodecyl methacrylate, cetyl methacrylate, octadecyl methacrylate, N-dodecylacrylamide, N-cetylacrylamide, N-phenylethyl acrylamide, 2-acrylamido-2-methylpentacosyl sulfonate sodium, N-octylpropionamide, 2-acrylamido-2-methyldocosylsulfonate sodium, N-tetradecyl acrylamide, N,N-dioctylacrylamide, hexafluorobutyl methacrylate, tetradecyl methacrylate, [(1-naphthyl)methyl]acrylamide, 2-(1-acetamide naphthalene) ethyl acrylate, N-[(1-pyrenylsulfonamido)ethyl] acrylamide, cetyl allyl tetramethylethylenediammonium dibromide, 2-acrylamidotetradecanesulfonate sodium, 2-acrylamido-2-methyldodecane sulfonate sodium, nonylphenol polyoxyethylene acrylate, octylphenol polyoxyethylene acrylate, dodecyl polyoxyethylene acrylate, octadecyl allyl tetramethylethylenediammonium dibromide, cetyl polyoxyethylene acrylate, 2-methacryloyloxyethyl-dimethyldodecylammonium bromide, N-cetylacrylamide, N-octylacrylamide, dodecyl allyl tetramethylbutylenediammonium dibromide, tetradecyl allyl tetramethylbutylenediammonium dichloride and (4-acrylamido)phenyl n-butyldimethylammonium bromide.

4. The hydrophobically associated polymer of claim 1, **characterized in that** the number of carbon atoms in the functional monomer is 2∼20.

5. The hydrophobically associated polymer of claim 1, **characterized in that**, said functional monomer is selected from one or more of 2-acrylamido-2-methylpropanesulfonic acid and sulfonate salts thereof, vinyl sulfonic acid and sulfonate salts thereof, styrylsulfonic acid and sulfonate salts thereof, and N-vinyl-2-pyrrolidone.

6. A method for preparing hydrophobically associated polymers as defined in any one of claims 1-5, **characterized by** comprising:
under the action of an initiator, acrylamide monomer is copolymerized with a hydrophobic monomer to generate a hydrophobically associated polymer;
wherein said hydrophobic monomer is selected from one or more of N-alkyl substituted acrylamide and derivatives thereof, alkyl acrylate, alkyl methacrylate, fluoro-substituted alkyl acrylate, fluoro-substituted alkyl methacrylate, allylalkyl quaternary ammonium salts, acrylamide alkyl sulfonic acid and sulfonate salts thereof, alkylphenol polyoxyethylene acrylate and polyoxyethylene alkyl acrylate; the viscosity-average molecular weight of said hydrophobically associated polymer, measured and calculated by using an Ubbelohde viscometer (0.55mm diameter) according to GB/T 12005.10-92, is 5,000,000∼35 000,000; wherein said allylalkyl quaternary ammonium salts are selected from 2-methacryloyloxyethyl-dimethyldodecylammonium bromide, dodecyl allyl tetramethylbutylenediammonium dibromide, tetradecyl allyl tetramethylbutylenediammonium dichloride, dodecyldipropyl allyl ammonium chloride. Sodium acrylate is also added; the molar ratio of the acrylamide monomer to sodium acrylate is 1:(0.1-0.2), and
the molar ratio of the acrylamide monomer to the hydrophobic monomer is 1:(0.005∼0.01)
a functional monomer is also added; said functional monomer is selected from one or more of sulfonic acid derivatives containing a terminal alkenyl group and sulfonate salt derivatives thereof, and heterocyclic derivatives containing a terminal alkenyl group; the molar ratio of the acrylamide monomer to the functional monomer is 1:(0.01∼0.03).

7. Use of the hydrophobically associated polymers of any of claims 1 to 5, or the hydrophobically associated polymers prepared according to the method of claim 6, in the fields of oilfield chemistry, water treatment, papermaking and mineral flotation.

## Patentansprüche

1. Ein hydrophobisch assoziiertes Polymer, umfassend
- Wiederholungseinheiten, die durch die Formeln (I) und (II) dargestellt sind: 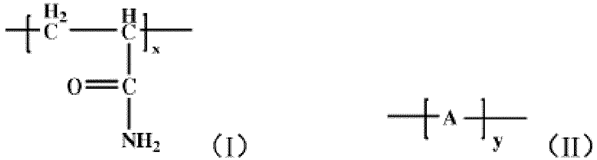 wobei x:y = 1:(0,005∼0,01), das A die Monomer Einheit von hydrophobem Monomer ist; das hydrophobe Monomer ausgewählt ist unter einem oder mehreren von N-Alkyl substituiertem Acrylamid und Derivaten davon, Alkylacrylat, Alkylmethacrylat, fluorsubstituiertem Alkylacrylat, fluorsubstituiertem Alkyl-methacrylat, quartären Allylalkylammoniumsalzen, Acrylamidalkylsulfonsäure und Sulfonatsalzen davon, Alkylphenolpolyoxyethylenacrylat und Polyoxyethylenalkylacrylat; und das viskositätsdurchschnittliche Molekulargewicht des hydrophobisch assoziierten Polymers, durch Verwenden eines Ubbelohde-Viskosimeters (Durchmesser 0,55 mm) GB/T 12005.10-92 entsprechend gemessen und berechnet, 5.000.000∼35.000.000 beträgt; wobei die quartären Allylalkylammoniumsalze ausgewählt sind unter 2-Methacryloyloxyethyldimethyldodecylammoniumbromid, Dodecylallyltetramethylbutylendiammoniumdibromid, Tetradecylallyltetramethylbutylendiammoniumdichlorid, Dodecyldipropylallylammoniumchlorid;
- die Wiederholungseinheit, die durch die Formel (III) dargestellt ist: 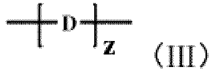 wobei x:z=1:(0,01∼0,03); das D die Monomer Einheit von funktionellem Monomer ist; das funktionelle Monomer ausgewählt ist unter einem oder mehreren von Sulfonsäurederivaten, die eine endständige Alkylgruppe enthalten, und Sulfonatsalzderivaten davon, und heterocyclischen Derivaten, die eine endständige Alkenylgruppe enthalten;
- die Wiederholungseinheit, die durch die Formel (IV) dargestellt ist: 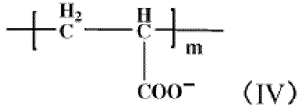 wobei x:m=1:(0,1∼0,20).

2. Der hydrophobisch assoziiertes Polymer nach Anspruch 1, **dadurch gekennzeichnet, dass** die Anzahl von Kohlenstoffatomen in der Alkylgruppe in mit N-Alkyl substituiertem Acrylamid und Derivaten davon, Alkylacrylat, Alkylmethacrylat, quartären Allylalkylammoniumsalzen, Acrylamidalkylsulfonsäure und Sulfonatsalzen davon, Alkylphenolpolyoxyethylenacrylat, Polyoxyethylenalkylacrylat, fluorsubstituiertem Alkylacrylat und fluorsubstituiertem Alkylmethacrylat jeweils unabhängig 4∼40 beträgt.

3. Ein hydrophobisch assoziiertes Polymer nach Anspruch 1, **dadurch gekennzeichnet, dass** das hydrophobe Monomer ausgewählt ist unter einem oder mehreren von 2-(N-Ethylperfluorsulfonsäureamin)ethylmethacrylat, 2-(N-Ethylperfluoroctan)butyl-methacrylat, Dodecylacrylat, Cetylacrylat, Octadecylacrylat, Dodecylmethacrylat, Cetylmethacrylat, Octadecylmethacrylat, N-Dodecylacrylamid, N-Cetylacrylamid, N-Phenylethylacrylamid, 2-Acrylamid-2-methylpentacosylsulfonat-Natrium, , 2-Acrylamid-2-methyldocosylsulfonat-Natrium, N-Tetradecyl-acrylamid, N,N-Dioctylacrylamid, Hexafluorbutylmethacrylat, Tetradecylmethacrylat, [(1-Naphthyl)-methyl]acrylamid, 2-(1-Acetamidnaphthalen)ethylacrylat, N-[(Pyrenylsulfonamid)-ethyl]acrylamid, Cetylallyltetramethylethylendiammoniumdibromid, 2-Acrylamid-tetradecansulfonat-Natrium, 2-Acrylamid-2-methyldodecan-sulfonat-Natrium, Nonylphenolpoly-oxyethylenacrylat, Octylphenolpolyoxyethylenacrylat, Dodecylpolyoxy-ethylenacrylat, Octadecylallyltetramethylethylendiammoniumdibromid, Cetylpolyoxy-ethylenacrylat, 2-Methacryloyloxyethyldimethyldodecylammoniumbromid, N-Cetyl-acrylamid, N-Octylacrylamid, Dodecylallyltetramethylbutylendiammoniumdibromid, Tetradecylallyltetramethylbutylendiammoniumdichlorid und (4-Acrylamid)phenyl-n-butyldimethyl-ammoniumbromid.

4. Ein hydrophobisch assoziiertes Polymer nach Anspruch 1, **dadurch gekennzeichnet, dass** die Anzahl von Kohlenstoffatomen in dem funktionellen Monomer 2∼20 beträgt.

5. Ein hydrophobisch assoziiertes Polymer nach Anspruch 1, **dadurch gekennzeichnet, dass** das funktionelle Monomer ausgewählt ist unter einem oder mehreren von 2-Acrylamid-2-methylpropansulfonsäure und Sulfonatsalzen davon, Vinylsulfonsäure und Sulfonatsalzen davon, Styrylsulfonsäure und Sulfonatsalzen davon und N-Vinyl-2-pyrrolidon.

6. Ein Verfahren für die Herstellung von hydrophobisch assoziierten Polymeren wie in einem der Ansprüche 1-5 definiert, **gekennzeichnet durch** Umfassen:
um ein hydrophobisch assoziiertes Polymer zu erzeugen wird, unter der Wirkung eines Initiators, Acrylamidmonomer mit einem hydrophoben Monomer copolymerisiert,
wobei das hydrophobe Monomer ausgewählt ist unter einem oder mehreren N-Alkyl substituiertem Acrylamiden und Derivaten davon, Alkylacrylat, Alkylmethacrylat, fluorsubstituiertem Alkylacrylat, fluorsubstituiertem Alkylmethacrylat, quartären Allylalkylammoniumsalzen, Acrylamidalkylsulfonsäure und Sulfonatsalzen davon, Alkylphenolpolyoxyethylenacrylat und Polyoxyethylenalkylacrylat; wobei das viskositätsdurchschnittliche Molekulargewicht des hydrophobisch assoziierten Polymers, durch Verwenden eines Ubbelohde-Viskosimeters (Durchmesser 0,55 mm) GB/T 12005.10-92 entsprechend gemessen und berechnet, 5.000.000∼35.000.000 beträgt; wobei die quartären Allylalkylammoniumsalze ausgewählt sind unter 2-Methacryloyloxyethyldimethyldodecylammoniumbromid, Dodecylallyltetramethylbutylendiammoniumdibromid, Tetradecylallyltetramethylbutylendiammoniumdichlorid, Dodecyldipropylallylammoniumchlorid, Natriumacrylat wird ebenfalls zugesetzt; das Molverhältnis des Acrylamidmonomers zu Natriumacrylat beträgt 1:(0,1∼0,2) und
das Molverhältnis des Acrylamidmonomers zu dem hydrophoben Monomer beträgt 1:(0,005∼0,01)
ein funktionelles Monomer wird ebenfalls zugegeben; das funktionelle Monomer wird ausgewählt unter einem oder mehreren von Sulfonsäurederivaten, die eine endständige Alkenylgruppe enthalten, und Sulfonatsalzderivaten davon, und heterocyclischen Derivaten, die eine endständige Alkenylgruppe enthalten; das Molverhältnis des Acrylamidmonomers zu dem funktionellen Monomer beträgt 1:(0,1∼0,03).

7. Verwendung der hydrophobisch assoziierten Polymere nach einem der Ansprüche 1 bis 5 oder der hydrophobisch assoziierten Polymere, die dem Verfahren nach Anspruch 6 entsprechend hergestellt werden, auf dem Gebiet der Ölfeldchemie, Wasserbehandlung, Papierherstellung und Mineralflotation.

## Revendications

1. Polymère hydrophobiquement associé, comprenant
- des unités de répétition représentées par les formules (I) et (II): 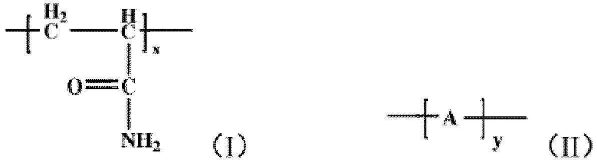 dans lesquels
x:y= 1:(0.005-0.01);
ledit A est l'unité monomère du monomère hydrophobe; le monomère hydrophobe est un ou plusieurs monomère(s) choisi(s) dans le groupe constitué par l'acrylamide substitué par un groupe N-alkyl et les dérivés de celui-ci, l'acrylate d'alkyl, le méthacrylate d'alkyle, l'acrylate d'alkyle substitué par un fluoro, le méthacrylate d'alkyle substitué par un fluoro, les sels d'ammonium quaternaire allylalkyl, l'acide acrylamide alkyl sulfonique et les sels sulfonates de celui-ci, et l'acrylate d'alkylphénol polyoxyéthylène et acrylate d'alkyl polyoxyéthylène; et
le poids moléculaire moyen de viscosité du polymère hydrophobiquement associé, mesuré et calculé à l'aide d'un viscosimètre Ubbelohde (diamètre 0,55 mm) conformément à GB/T 12005.10-92, est de 5.000.000 à 35.000.000;
dans lesquels lesdits sels d'ammonium quaternaire allylalkyl sont choisis dans le groupe constitué par le bromure de 2-méthacryloxyéthyldiméthyldodécylammonium, le dibromure de dodécyl allyl tétraméthylbutylènediammonium, le dichlorure de tétradécyl allyl tétraméthylbutylènediammonium, et le chlorure de dodécyldipropyl allyl ammonium,
- l'unité de répétition représentée par la formule (III): 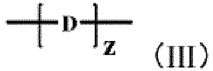 dans laquelle
x:z=1:(0,01-0,03);
ledit D est l'unité monomère du monomère fonctionnel;
le monomère fonctionnel est un ou plusieurs monomère(s) choisi(s) dans le groupe constitué par les dérivés de l'acide sulfonique contenant un groupe alcényle terminal et les dérivés de sel sulfonate de celui-ci, et les dérivés hétérocycliques contenant un groupe alcényle terminal;
- l'unité de répétition représentée par la formule (IV): 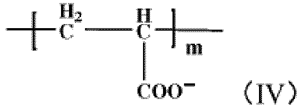 dans laquelle
x:m=1:(0.1-0.20).

2. Polymère hydrophobiquement associé selon la revendication 1, **caractérisé en ce que**,
le nombre d'atomes de carbone dans le groupe alkyl dans l'acrylamide substitué par un groupe N-alkyl et les dérivés de celui-ci, l'acrylate d'alkyl, le méthacrylate d'alkyle, les sels d'ammonium quaternaire allylalkyl, l'acide acrylique alkyl sulfonique et les sels sulfonates de celui-ci, et l'acrylate d'alkylphénol polyoxyéthylène et acrylate d'alkyl polyoxyéthylène, l'acrylate d'alkyle substitué par un fluoro, et le méthacrylate d'alkyle substitué par un fluoro est chacun indépendamment de 4 à 40.

3. Polymère hydrophobiquement associé selon la revendication 1, **caractérisé en ce que** ledit monomère hydrophobe est un ou plusieurs monomère(s) choisi(s) dans le groupe constitué par le 2- (N-éthyl perfluorosulfonique amine) méthacrylate d'éthyle, 2- (N-éthyl perfluorooctane) méthacrylate de butyle, acrylate de dodécyle, cétyle acrylate, octadécyle acrylate, dodécyle méthacrylate, cétyle méthacrylate, octadécyle méthacrylate, N-dodécylacrylamide, N-cétylacrylamide, N-phényléthyl acrylamide, 2-acrylamido-2-méthylpentacosyl sulfonate de sodium, N-octylpropionamide, 2-acrylamido-2-méthyldocosylsulfonate de sodium, N-tétradécylacrylamide, N,N-dioctylacrylamide, hexafluorobutyl méthacrylate, tétradécyl méthacrylate, [(1-naphtyl) méthyl] acrylamide, 2- (1-acétamide naphtalène) éthyl acrylate, N-[(1-pyrénylsulfonamido)éthyl]acrylamide, cétyl allyl tétraméthyléthyléthylènediammonium dibromure, 2-acrylamidotétradécanesulfonate de sodium, 2-acrylamido-2-méthyldodécane sulfonate de sodium, nonylphénol polyoxyéthylène acrylate, octylphénol polyoxyéthylène acrylate, dodécyl polyoxyéthylène acrylate, dibromure d'octadécyl allyl tétraméthyléthylènediammonium, cétyl polyoxyéthylène acrylate, bromure de 2-méthacryloyloxyéthyl-diméthyldodécylammonium, N-cétylacrylamide, N-octylacrylamide, le dibromure de dodécyl allyl tétraméthylbutylènediammonium, le dichlorure de tétradécyl allyl tétraméthylbutylènediammonium et le bromure de (4-acrylamido) phényl n-butyldiméthylammonium.

4. Polymère hydrophobiquement associé selon la revendication 1, **caractérisé en ce que** le nombre d'atomes de carbone dans le monomère fonctionnel est de 2 à 20.

5. Polymère hydrophobiquement associé selon la revendication 1, **caractérisé en ce que** ledit monomère fonctionnel est un ou plusieurs monomère(s) choisi(s) dans le groupe constitué par l'acide 2-acrylamido-2-méthylpropanesulfonique et les sels sulfonates de celui-ci, l'acide vinyl sulfonique et les sels sulfonates de celui-ci, l'acide styrylsulfonique et les sels sulfonates de celui-ci, et la N-vinyl-2-pyrrolidone.

6. Procédé de préparation de polymères hydrophobiquement associés tels que définis dans l'une quelconque des revendications 1 à 5, **caractérisé en ce qu'**il comprend:
- sous l'action d'un initiateur, le monomère acrylamide est copolymérisé avec un monomère hydrophobe pour générer un polymère hydrophobiquement associé ;
dans lequel ledit monomère hydrophobe est un ou plusieurs monomère(s) choisi(s) dans le groupe constitué par l'acrylamide substitué par un groupe N-alkyl et les dérivés de celui-ci, l'acrylate d'alkyl, le méthacrylate d'alkyle, l'acrylate d'alkyle substitué par un fluoro, le méthacrylate d'alkyle substitué par un fluoro, les sels d'ammonium quaternaire allylalkyl, l'acide acrylamide alkyl sulfonique et les sels sulfonates de celui-ci, et l'acrylate d'alkylphénol polyoxyéthylène et acrylate d'alkyl polyoxyéthylène; et
le poids moléculaire moyen de viscosité du polymère hydrophobiquement associé, mesuré et calculé à l'aide d'un viscosimètre Ubbelohde (diamètre 0,55 mm) conformément à GB/T 12005.10-92, est de 5.000.000 à 35.000.000;
dans lesquels lesdits sels d'ammonium quaternaire allylalkyl sont choisis dans le groupe constitué par le bromure de 2-méthacryloxyéthyldiméthyldodécylammonium, le dibromure de dodécyl allyl tétraméthylbutylènediammonium, le dichlorure de tétradécyl allyl tétraméthylbutylènediammonium, et le chlorure de dodécyldipropyl allyl ammonium,
de l'acrylate de sodium est également ajouté, le rapport molaire du monomère acrylamide par rapport à l'acrylate de sodium est de 1: (0,1-0,2),
le rapport molaire du monomère acrylamide par rapport au monomère hydrophobe est de 1: (0,005-0,01),
un monomère fonctionnel est également ajouté; ledit monomère est un ou plusieurs monomère(s) choisi(s) dans le groupe constitué par les dérivés de l'acide sulfonique contenant un groupe alcényle terminal et les dérivés de sel sulfonate de celui-ci, et les dérivés hétérocycliques contenant un groupe alcényle terminal; le rapport molaire du monomère acrylamide par rapport au monomère fonctionnel est de 1:(0,01 -0,03).

7. Utilisation des polymères hydrophobiquement associés selon l'une quelconque des revendications 1 à 5, ou des polymères hydrophobiquement associés préparés selon le procédé de la revendication 6, dans les domaines de la chimie des champs pétroliers, du traitement de l'eau, de la fabrication du papier et de la flottation minérale.
